# EUROPEAN PATENT APPLICATION

(11) **EP 4 788 030 A1**
(43) Date of publication of application: **05.08.2026**
(21) Application number: 23955130.2
(22) Date of filing: 11.10.2023
(51) Int. Cl.: H04W 72/512

(54) **COMMUNICATION METHOD AND APPARATUS**

(71) Applicant: HUAWEI TECHNOLOGIES CO., LTD., Shenzhen 518129 (CN)
(72) Inventor: GAO, Na, Shenzhen, Guangdong 518129 (CN); TANG, Hao, Shenzhen, Guangdong 518129 (CN); WANG, Ting, Shenzhen, Guangdong 518129 (CN); MA, Jianglei, Shenzhen, Guangdong 518129 (CN)
(74) Representative: Thun, Clemens
(86) International application number: PCT/CN2023/124111
(87) International publication number: WO 2025/076748

(57) **Abstract**

A communication method and apparatus are provided, relating to the field of communication technologies, capable of resolving encoding and transmission problems of short codes, and improving decoding performance and communication reliability. The method includes: sending first-stage control information, where the first-stage control information includes scheduling information of second-stage control information, and the scheduling information of the second-stage control information includes scheduling information of first data; and sending the second-stage control information, where the second-stage control information is determined based on a first joint encoding result of the first data and first information, and the first information is second control information of second data.

## Description

### TECHNICAL FIELD

Embodiments of this application relate to the field of communication technologies, and in particular, to a communication method and apparatus.

### BACKGROUND

In a communication system, when sending information to a receiving device, a transmitting device may encode the information, and send encoded information to the receiving device. From the perspective of coding theories, a longer code length of information indicates better channel coding performance. A short code length of information may compromise communication reliability and degrade communication performance.

Therefore, how to encode and transmit information to improve communication reliability becomes an urgent technical problem to be resolved.

### SUMMARY

This application provides a communication method and apparatus, to resolve encoding and transmission problems of short codes, improve decoding performance and communication reliability.

According to a first aspect, an embodiment of this application provides a communication method. The method may be performed by a transmitting device. Unless otherwise specified, the "transmitting device" in this application may be the transmitting device, or may be a component (for example, a processor, a chip, or a chip system) in the transmitting device, or may be a logical module or software that can implement all or some functions of the transmitting device. The method includes: sending first-stage control information, where the first-stage control information includes scheduling information of second-stage control information, and the scheduling information of the second-stage control information includes scheduling information of first data; and sending the second-stage control information, where the second-stage control information is determined based on a first joint encoding result of the first data and first information, and the first information is second control information of second data.

Based on the first aspect, a short code (for example, the first data) may be encoded and transmitted based on a two-stage DCI scheduling structure for multi-service multiplexing. The transmitting device adds the scheduling information of the first data to the first-stage control information, so that a scheduling delay of the first data can be reduced, thereby reducing a decoding delay of the first data. In addition, the transmitting device may further perform first joint encoding on the first data and the first information, to achieve a long code gain, improve decoding performance, and improve communication reliability.

According to a second aspect, an embodiment of this application provides a communication method. The method may be performed by a receiving device. Unless otherwise specified, the "receiving device" in this application may be the receiving device, or may be a component (for example, a processor, a chip, or a chip system) in the receiving device, or may be a logical module or software that can implement all or some functions of the receiving device. The method includes: receiving first-stage control information, where the first-stage control information includes scheduling information of second-stage control information, and the scheduling information of the second-stage control information includes scheduling information of first data; receiving the second-stage control information, where the second-stage control information is determined based on a first joint encoding result of the first data and first information, and the first information is second control information of second data; and decoding the second-stage control information based on the scheduling information of the second-stage control information, to obtain a decoding result, where the decoding result includes the first data.

Based on the second aspect, a short code (for example, the first data) may be encoded and transmitted based on a two-stage DCI scheduling structure for multi-service multiplexing. The transmitting device adds the scheduling information of the first data to the first-stage control information, so that a scheduling delay of the first data can be reduced, thereby reducing a decoding delay of the first data. In addition, the transmitting device may further perform first joint encoding on the first data and the first information, to achieve a long code gain, improve decoding performance, and improve communication reliability.

In a possible design, the decoding result further includes the first information.

In a possible design, first joint decoding is performed on the first data and the second-stage control information, to obtain the decoding result.

Based on the possible design, when performing first joint decoding on the first data and the second-stage control information, the receiving device may first decode the first data, and then decode the first information, to reduce a decoding delay of the first data, achieve a long code gain, improve decoding performance, and improve communication reliability.

Based on the first aspect and the second aspect, in a possible design, the scheduling information of the second-stage control information further includes scheduling information of the first information.

Based on the possible design, the transmitting device adds the scheduling information of the first information to the first-stage control information, so that a scheduling delay of the first information can be reduced. This helps quickly decode the first information, reduce a decoding delay, and improve decoding performance.

Based on the first aspect and the second aspect, in a possible design, the scheduling information includes one or more of the following: port configuration information, a demodulation reference signal DMRS initialization sequence, a modulation and coding scheme MCS, a redundancy version RV, a new data indicator NDI, a quantity of hybrid automatic repeat request HARQ processes, or a downlink assignment index DAI.

Based on the possible design, the transmitting device may separately indicate the scheduling information of the first data and the scheduling information of the first information in the first-stage control information. The transmitting device may alternatively jointly indicate scheduling information shared by the first data and the first information, and separately indicate scheduling information exclusive to the first data and scheduling information exclusive to the first information in the first-stage control information, to reduce signaling overheads.

Based on the first aspect and the second aspect, in a possible design, the first-stage control information further includes one or more of the following: first indication information, time-frequency resource information of the second-stage control information, length information of the first data, mapping information from a virtual resource block VRB to a physical resource block PRB, physical uplink control channel PUCCH signaling of the first data, or physical sidelink feedback channel PSFCH signaling of the first data, where the first indication information indicates that the second-stage control information including the first data exists.

Based on the first aspect and the second aspect, in a possible design, the first data is located in the first N bits ranked in descending order of decoding orders in the second-stage control information, where N is a positive integer.

Based on the possible design, the transmitting device maps the first data to the first N bits ranked in descending order of decoding orders in the second-stage control information, so that when decoding the second-stage control information, the receiving device can determine the first N bits ranked in descending order of decoding orders in the second-stage control information as the first data, thereby preferentially decoding the first data, reducing a decoding delay of the first data, and improving decoding performance.

Based on the first aspect and the second aspect, in a possible design, the second-stage control information further includes cyclic redundancy check CRC information, the CRC information is located in an (N+1)^{th} bit to an (N+M)^{th} bit ranked in descending order of decoding orders in the second-stage control information, where M is a positive integer, and the CRC information is used to check the first data.

Based on the possible design, the transmitting device may further add the CRC information to the second-stage control information, to assist the receiving device in determining whether the first data is correctly decoded. The transmitting device adds the CRC information to the (N+1)^{th} bit to the (N+M)^{th} bit ranked in descending order of decoding orders in the second-stage control information, so that the receiving device can decode the CRC information after decoding the first data, thereby quickly determining whether the first data is correctly decoded, reducing a decoding delay, and improving decoding performance.

Based on the first aspect and the second aspect, in a possible design, the first information includes one or more of the following: time-frequency resource information of the second data, scheduling information of the second data, PUCCH signaling of the second data, or PSFCH signaling of the second data.

Based on the first aspect and the second aspect, in a possible design, the second-stage control information further includes one or more of the following: second indication information, the PUCCH signaling of the first data, or the PSFCH signaling of the first data, where the second indication information indicates a format of the second-stage control information.

Based on the possible design, the format of the second-stage control information may indicate a field type included in the second-stage control information, a length of each field, and the like. The receiving device may interpret the received second-stage control information based on the format indicated by the second indication information.

Based on the first aspect and the second aspect, in a possible design, a priority of a decoding order of the PUCCH signaling of the first data is lower than a priority of a decoding order of the first data; and/or the priority of the decoding order of the PUCCH signaling of the first data is higher than a priority of a decoding order of the first information.

Based on the first aspect and the second aspect, in a possible design, a priority of a decoding order of the PSFCH signaling of the first data is lower than a priority of a decoding order of the first data; and/or the priority of the decoding order of the PSFCH signaling of the first data is higher than a priority of a decoding order of the first information.

Based on the foregoing two possible designs, when performing encoding, the transmitting device may adjust the priority of the decoding order of the PUCCH signaling of the first data and/or the priority of the decoding order of the PSFCH signaling of the first data, so that after decoding the first data, the receiving device decodes the PUCCH signaling of the first data and/or the PSFCH signaling of the first data, thereby reducing a decoding delay of the first data, and improving decoding performance.

Based on the first aspect and the second aspect, in a possible design, the first-stage control information further includes retransmission indication configuration information, where the retransmission indication configuration information indicates one or more of the following: retransmitted content, a quantity of retransmissions, or a retransmission resource, and the retransmitted content is the first data and/or the second-stage control information.

Based on the possible design, the transmitting device may further add the retransmission indication configuration information to the first-stage control information, to indicate to retransmit the first data and/or the second-stage control information, thereby improving reliability of the first data.

According to a third aspect, an embodiment of this application provides a communication method. The method may be performed by a transmitting device. Unless otherwise specified, the "transmitting device" in this application may be the transmitting device, or may be a component (for example, a processor, a chip, or a chip system) in the transmitting device, or may be a logical module or software that can implement all or some functions of the transmitting device. The method includes: sending first-stage control information, where the first-stage control information includes scheduling information of second-stage control information, the scheduling information of the second-stage control information includes scheduling information of second information, and the second information is determined based on an independent encoding result of first data; and sending the second-stage control information, where the second-stage control information includes the second information and third information, the third information is determined based on a second joint encoding result of third data and first information, the third data is a part or all of the first data, and the first information is second control information of second data.

Based on the third aspect, a short code (for example, the first data) may be encoded and transmitted based on a two-stage DCI scheduling structure for multi-service multiplexing. The transmitting device adds the scheduling information of the first data to the first-stage control information, so that a scheduling delay of the first data can be reduced, thereby reducing a decoding delay of the first data. In addition, the transmitting device independently encodes the first data, so that a decoding delay can be reduced. This is applicable to a communication scenario in which a channel environment is good.

According to a fourth aspect, an embodiment of this application provides a communication method. The method may be performed by a receiving device. Unless otherwise specified, the "receiving device" in this application may be the receiving device, or may be a component (for example, a processor, a chip, or a chip system) in the receiving device, or may be a logical module or software that can implement all or some functions of the receiving device. The method includes: receiving first-stage control information, where the first-stage control information includes scheduling information of second-stage control information, the scheduling information of the second-stage control information includes scheduling information of second information, and the second information is determined based on an independent encoding result of first data; receiving the second-stage control information, where the second-stage control information includes the second information and third information, the third information is determined based on a second joint encoding result of third data and first information, the third data is a part or all of the first data, and the first information is second control information of second data; and independently decoding the second information based on the scheduling information of the second information.

Based on the fourth aspect, a short code (for example, the first data) may be encoded and transmitted based on a two-stage DCI scheduling structure for multi-service multiplexing. The transmitting device adds the scheduling information of the first data to the first-stage control information, so that a scheduling delay of the first data can be reduced, thereby reducing a decoding delay of the first data. In addition, the transmitting device independently encodes the first data, so that a decoding delay can be reduced. This is applicable to a communication scenario in which a channel environment is good.

In a possible design, second joint decoding is performed on the second information and the third information based on the scheduling information of the second-stage control information.

Based on the possible design, the transmitting device may further perform second joint encoding on the third data and the first information, to achieve a long code gain, improve decoding performance, and improve communication reliability.

In a possible design, third joint decoding is performed on the third information based on the scheduling information of the second-stage control information.

Based on the possible design, if the receiving device fails to independently decode the second information, the receiving device may further perform third joint decoding on the third information. If the decoding succeeds, the receiving device may obtain the third data and the first information.

In a possible design, the scheduling information of the second-stage control information further includes scheduling information of the third information.

In a possible design, the scheduling information of the third information includes scheduling information of the third data and scheduling information of the first information.

Based on the foregoing two possible designs, the transmitting device adds the scheduling information of the third information to the first-stage control information, so that a scheduling delay of the third information can be reduced. This helps quickly decode the third information, reduce a decoding delay, and improve decoding performance.

Based on the third aspect and the fourth aspect, in a possible design, the scheduling information includes one or more of the following: port configuration information, a demodulation reference signal DMRS initialization sequence, a modulation and coding scheme MCS, a redundancy version RV, a new data indicator NDI, a quantity of hybrid automatic repeat request HARQ processes, or a downlink assignment index DAI.

Based on the possible design, the transmitting device may separately indicate the scheduling information of the second information and the scheduling information of the third information in the first-stage control information. The transmitting device may alternatively jointly indicate scheduling information shared by the second information and the third information, and separately indicate scheduling information exclusive to the second information and scheduling information exclusive to the third information in the first-stage control information, to reduce signaling overheads.

Based on the third aspect and the fourth aspect, in a possible design, the first-stage control information further includes one or more of the following: third indication information, time-frequency resource information of the second information, time-frequency resource information of the third information, time-frequency resource information of the second-stage control information, mapping information from a virtual resource block VRB to a physical resource block PRB, physical uplink control channel PUCCH signaling of the first data, or physical sidelink feedback channel PSFCH signaling of the first data, where the third indication information indicates that the second-stage control information including the second information and the third information exists.

Based on the third aspect and the fourth aspect, in a possible design, the third data is located in the first X bits ranked in descending order of decoding orders in the third information, where X is a positive integer.

Based on the possible design, the transmitting device maps the third data to the first X bits ranked in descending order of decoding orders in the third information, so that when decoding the third information, the receiving device can determine the first X bits ranked in descending order of decoding orders in the third information as the third data, thereby preferentially decoding the third data, reducing a decoding delay of the third data, and improving decoding performance.

Based on the third aspect and the fourth aspect, in a possible design, the second-stage control information further includes cyclic redundancy check CRC information, the CRC information is located in an (X+1)^{th} bit to an (X+M)^{th} bit ranked in descending order of decoding orders in the third information, where M is a positive integer, and the CRC information is used to check the third data.

Based on the possible design, the transmitting device may further add the CRC information to the third information, to assist the receiving device in determining whether the third data is correctly decoded. The transmitting device adds the CRC information to the (X+1)^{th} bit to the (X+M)^{th} bit ranked in descending order of decoding orders in the third information, so that the receiving device can decode the CRC information after decoding the third data, thereby quickly determining whether the third data is correctly decoded, reducing a decoding delay, and improving decoding performance.

Based on the third aspect and the fourth aspect, in a possible design, the first information includes one or more of the following: time-frequency resource information of the second data, scheduling information of the second data, PUCCH signaling of the second data, or PSFCH signaling of the second data.

Based on the third aspect and the fourth aspect, in a possible design, the third information further includes one or more of the following: fourth indication information, PUCCH signaling of the third data, or PSFCH signaling of the third data, where the fourth indication information indicates a format of the third information.

Based on the possible design, the format of the third information may indicate a field type included in the third information, a length of each field, and the like. The receiving device may interpret the received third information based on the format indicated by the fourth indication information.

Based on the third aspect and the fourth aspect, in a possible design, a priority of a decoding order of the PUCCH signaling of the third data is lower than a priority of a decoding order of the third data; and/or the priority of the decoding order of the PUCCH signaling of the third data is higher than a priority of a decoding order of the first information.

Based on the third aspect and the fourth aspect, in a possible design, a priority of a decoding order of the PSFCH signaling of the third data is lower than a priority of a decoding order of the third data; and/or the priority of the decoding order of the PSFCH signaling of the third data is higher than a priority of a decoding order of the first information.

Based on the foregoing two possible designs, when performing encoding, the transmitting device may adjust the priority of the decoding order of the PUCCH signaling of the first data and/or the priority of the decoding order of the PSFCH signaling of the first data, so that after decoding the first data, the receiving device decodes the PUCCH signaling of the first data and/or the PSFCH signaling of the first data, thereby reducing a decoding delay of the first data, and improving decoding performance.

Based on the third aspect and the fourth aspect, in a possible design, the first-stage control information further includes retransmission indication configuration information, where the retransmission indication configuration information indicates one or more of the following: retransmitted content, a quantity of retransmissions, or a retransmission resource, and the retransmitted content is one or more of the following: the second-stage control information, the second information, the third information, or the third data.

Based on the possible design, the transmitting device may further add the retransmission indication configuration information to the first-stage control information, to indicate to retransmit the retransmitted content, thereby improving reliability of the first data.

According to a fifth aspect, an embodiment of this application provides a communication apparatus. The communication apparatus may be used in the transmitting device in the first aspect or the third aspect, to implement a function performed by the transmitting device. The communication apparatus may be the transmitting device, or may be a chip, a chip system, a system-on-a-chip, or the like in the transmitting device. The communication apparatus may perform the function performed by the transmitting device by hardware, or may be implemented by hardware by executing corresponding software. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

For example, the transceiver module is configured to send first-stage control information, where the first-stage control information includes scheduling information of second-stage control information, and the scheduling information of the second-stage control information includes scheduling information of first data; and the transceiver module is further configured to send the second-stage control information, where the second-stage control information is determined based on a first joint encoding result of the first data and first information, and the first information is second control information of second data.

For another example, the transceiver module is configured to send first-stage control information, where the first-stage control information includes scheduling information of second-stage control information, the scheduling information of the second-stage control information includes scheduling information of second information, and the second information is determined based on an independent encoding result of first data; and the transceiver module is further configured to send the second-stage control information, where the second-stage control information includes the second information and third information, the third information is determined based on a second joint encoding result of third data and first information, the third data is a part or all of the first data, and the first information is second control information of second data.

Optionally, the transceiver module and the processing module of the communication apparatus in the fifth aspect may further perform a corresponding function in the first aspect or any possible design of the first aspect, or perform a corresponding function in the third aspect or any possible design of the third aspect. For details, refer to the detailed descriptions in the method example. For beneficial effects that can be achieved, refer to the foregoing related content.

According to a sixth aspect, an embodiment of this application provides a communication apparatus. The communication apparatus may be used in the receiving device in the second aspect or the fourth aspect, to implement a function performed by the receiving device. The communication apparatus may be the receiving device, or may be a chip, a chip system, a system-on-a-chip, or the like in the receiving device. The communication apparatus may perform the function performed by the receiving device by hardware, or may be implemented by hardware by executing corresponding software. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

For example, the transceiver module is configured to receive first-stage control information, where the first-stage control information includes scheduling information of second-stage control information, and the scheduling information of the second-stage control information includes scheduling information of first data; the transceiver module is further configured to receive the second-stage control information, where the second-stage control information is determined based on a first joint encoding result of the first data and first information, and the first information is second control information of second data; and the processing module is configured to decode the second-stage control information based on the scheduling information of the second-stage control information, to obtain a decoding result, where the decoding result includes the first data.

For another example, the transceiver module is configured to receive first-stage control information, where the first-stage control information includes scheduling information of second-stage control information, the scheduling information of the second-stage control information includes scheduling information of second information, and the second information is determined based on an independent encoding result of first data; the transceiver module is further configured to receive the second-stage control information, where the second-stage control information includes the second information and third information, the third information is determined based on a second joint encoding result of third data and first information, the third data is a part or all of the first data, and the first information is second control information of second data; and the processing module is configured to independently decode the second information based on the scheduling information of the second information.

Optionally, the transceiver module and the processing module of the communication apparatus in the sixth aspect may further perform a corresponding function in the second aspect or any possible design of the second aspect, or perform a corresponding function in the fourth aspect or any possible design of the fourth aspect. For details, refer to the detailed descriptions in the method example. For beneficial effects that can be achieved, refer to the foregoing related content.

According to a seventh aspect, an embodiment of this application provides a communication apparatus. The communication apparatus includes one or more processors. The one or more processors are configured to run a computer program or instructions. When the one or more processors execute the computer program or the instructions, the communication method according to any one of the first aspect to the fourth aspect is performed.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to an eighth aspect, an embodiment of this application provides a communication apparatus. The communication apparatus includes an interface circuit and a logic circuit. The interface circuit is configured to input and/or output information. The logic circuit is configured to perform the communication method according to any one of the first aspect to the fourth aspect, to perform processing based on information and/or generate information.

According to a ninth aspect, an embodiment of this application provides a communication apparatus. The communication apparatus may be a transmitting device, or may be a one-to-one corresponding module or unit (for example, a chip, a chip system, or a circuit) in the transmitting device for performing the method/operation/step/action described in the first aspect or the third aspect, or may be a module or unit that can be matched with the transmitting device. Alternatively, the communication apparatus may be a receiving device, or may be a one-to-one corresponding module or unit (for example, a chip, a chip system, or a circuit) in the receiving device for performing the method/operation/step/action described in the second aspect or the fourth aspect, or may be a module or unit that can be matched with the receiving device.

According to a tenth aspect, an embodiment of this application provides a computer-readable storage medium. The computer-readable storage medium stores computer instructions or a program. When the computer instructions or the program runs on a computer, the communication method according to any one of the first aspect to the fourth aspect is performed.

According to an eleventh aspect, an embodiment of this application provides a computer program product including computer instructions. When the computer program product runs on a computer, the communication method according to any one of the first aspect to the fourth aspect is performed.

According to a twelfth aspect, an embodiment of this application provides a computer program. When the computer program runs on a computer, the communication method according to any one of the first aspect to the fourth aspect is performed.

According to a thirteenth aspect, an embodiment of this application provides a chip, including a processor. The processor is coupled to a memory, the memory is configured to store a program or instructions, and when the program or the instructions are executed by the processor, the communication method according to any one of the first aspect to the fourth aspect is performed.

For technical effects brought by any design manner of the seventh aspect to the thirteenth aspect, refer to the technical effects brought by any one of the first aspect to the fourth aspect. Details are not described again.

According to a fourteenth aspect, an embodiment of this application provides a communication system. The communication system may include the communication apparatus configured to perform the first aspect or any possible design of the first aspect and the communication apparatus configured to perform the second aspect or any possible design of the second aspect, or include the communication apparatus configured to perform the third aspect or any possible design of the third aspect and the communication apparatus configured to perform the fourth aspect or any possible design of the fourth aspect.

### BRIEF DESCRIPTION OF DRAWINGS

FIG. 1A and FIG. 1B are diagrams of joint encoding according to an embodiment of this application;
FIG. 2 is a diagram of two-stage DCI according to an embodiment of this application;
FIG. 3 is a diagram of a two-stage DCI scheduling structure for multi-service multiplexing according to an embodiment of this application;
FIG. 4 is a diagram of a satellite communication system according to an embodiment of this application;
FIG. 5 is a diagram of an inter-satellite link communication system according to an embodiment of this application;
FIG. 6 is a diagram of a cellular communication system according to an embodiment of this application;
FIG. 7 is a diagram of a wireless projection communication system according to an embodiment of this application;
FIG. 8 is a diagram of an IAB communication system according to an embodiment of this application;
FIG. 9 is a diagram of a communication apparatus according to an embodiment of this application;
FIG. 10 is a flowchart of a communication method according to an embodiment of this application;
FIG. 11 is a diagram of a two-stage DCI scheduling structure for multi-service multiplexing according to an embodiment of this application;
FIG. 12 is a diagram of bit flipping according to an embodiment of this application;
FIG. 13 is a diagram of a two-stage DCI scheduling structure for multi-service multiplexing according to an embodiment of this application;
FIG. 14A and FIG. 14B are diagrams of a retransmission according to an embodiment of this application;
FIG. 15A and FIG. 15B are diagrams of a retransmission according to an embodiment of this application;
FIG. 16 is a flowchart of a communication method according to an embodiment of this application;
FIG. 17 is a diagram of a two-stage DCI scheduling structure for multi-service multiplexing according to an embodiment of this application;
FIG. 18 is a diagram of a two-stage DCI scheduling structure for multi-service multiplexing according to an embodiment of this application;
FIG. 19A and FIG. 19B are diagrams of a retransmission according to an embodiment of this application;
FIG. 20A and FIG. 20B are diagrams of a retransmission according to an embodiment of this application;
FIG. 21 is a diagram of a communication apparatus according to an embodiment of this application; and
FIG. 22 is a diagram of a communication apparatus according to an embodiment of this application.

### DESCRIPTION OF EMBODIMENTS

Before embodiments of this application are described, technical terms used in embodiments of this application are described.

Ultra-reliable and low-latency communication (ultra-reliable and low-latency communication, URLLC), which is one of three major application scenarios of a fifth generation (fifth generation, 5G) mobile communication system, is a typical scenario that distinguishes 5G from 2G/3G/4G. As a breakthrough for the mobile communication industry to enter the vertical industry, URLLC is crucial to wide application of fields such as autonomous driving, industrial manufacturing, internet of vehicles, and smart grid, and is fully enhanced in the 3rd generation partnership project (3rd generation partnership project, 3GPP) new radio (new radio, NR) R16 phase.

Most prominent features of the URLLC scenario are low latency and high reliability. The URLLC scenario has a wide range of applications, and requirements for latency, reliability, and bandwidth are different in different scenarios. Specifically, the URLLC scenario includes at least a power automation "three remote" scenario, an internet of vehicles scenario, and an industrial manufacturing scenario.

Joint encoding: In a communication system, when sending information to a receiving device, a transmitting device may encode the information, and send encoded information to the receiving device. According to coding theories, a longer code length of information indicates better channel encoding performance. A short code length of information may compromise communication reliability and degrade communication performance. Based on this, joint encoding may be performed on information with a short code length and information with a long code length, to achieve a long code gain, and improve decoding performance.

For example, URLLC has a high reliability requirement, but a code length of URLLC is short. Therefore, a long code gain may be achieved through joint encoding. Enhanced mobile broadband (enhanced mobile broadband, eMBB) has low reliability, but a code length of eMBB is long. Therefore, joint encoding may be performed on a URLLC short code and an eMBB long code to achieve a long code gain, and improve decoding performance.

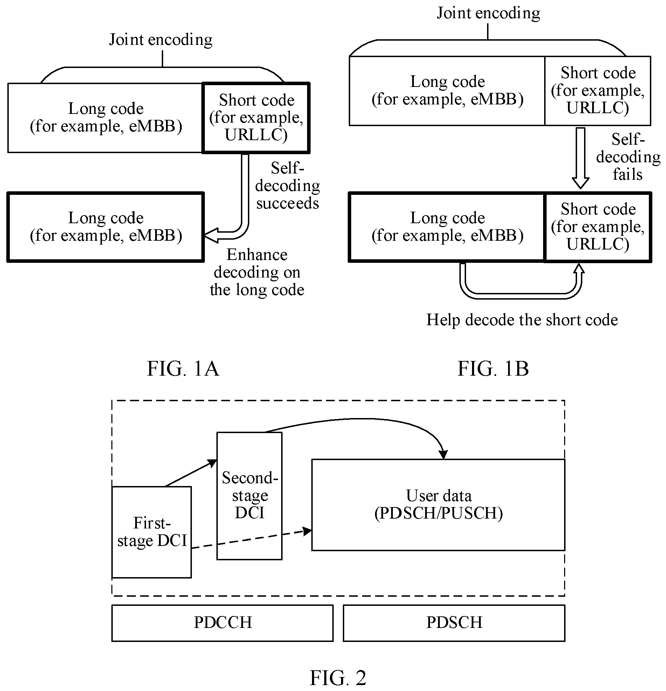

Based on the foregoing joint encoding, as shown in FIG. 1A or FIG. 1B, when performing decoding, the receiving device may first perform self-decoding on the short code (for example, URLLC). If the self-decoding succeeds, decoding on the long code (for example, eMBB) may be enhanced, so that a gain of a reduced code rate can be achieved for the long code. Alternatively, if the self-decoding fails, joint decoding may be performed with the long code to achieve a long code gain, and improve decoding performance.

However, the foregoing joint encoding is limited to joint encoding of data and joint encoding of control information, which has significant limitations.

A two-stage downlink control information (downlink control information, DCI) solution includes first-stage DCI and second-stage DCI. As shown in FIG. 2, the first-stage DCI (or described as DCI-1 or 1^{st} DCI) is carried on a physical downlink control channel (physical downlink control channel, PDCCH), and indicates a time-frequency-space resource, a modulation order, and a code rate of the second-stage DCI (or described as DCI-2 or 2^{nd} DCI). The second-stage DCI is carried on a physical downlink shared channel (physical downlink shared channel, PDSCH), and indicates downlink scheduling information, uplink scheduling information, or downlink scheduling information and uplink scheduling information.

The two-stage DCI solution may support a flexible DCI format. However, the solution is applicable to a single-service transmission scenario, and cannot meet a transmission requirement of a multi-service multiplexing scenario.

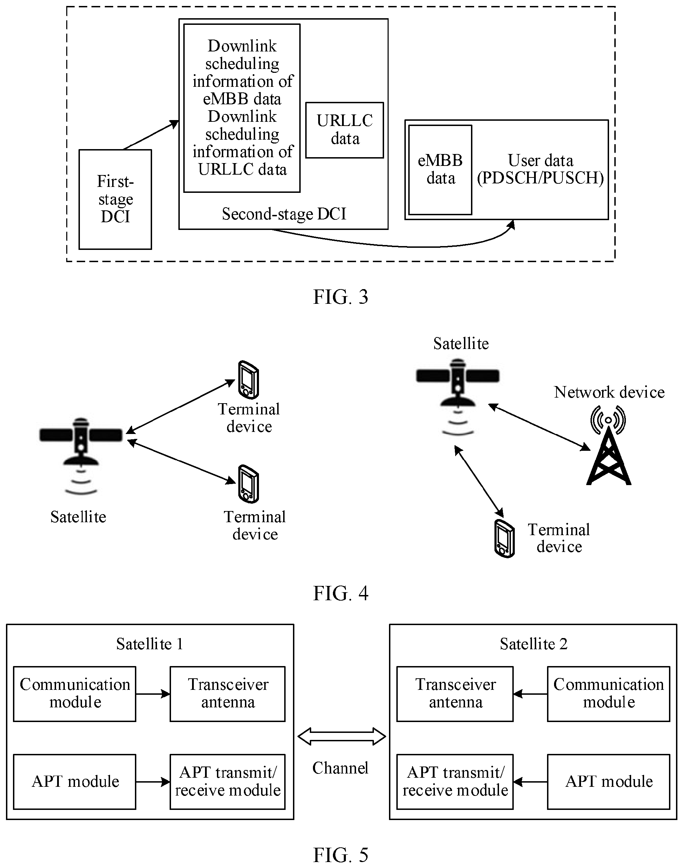

Based on this, the two-stage DCI solution shown in FIG. 2 may be adjusted to obtain a two-stage DCI scheduling structure for multi-service multiplexing shown in FIG. 3, so as to meet a transmission requirement of a multi-service multiplexing scenario.

As shown in FIG. 3, the first-stage DCI may indicate a time-frequency resource, a modulation and coding scheme (modulation and coding scheme, MCS), and the like of the second-stage DCI. The second-stage DCI may include downlink scheduling information of eMBB data (eMBB data), downlink scheduling information of URLLC data (URLLC data), and the URLLC data. The second-stage DCI may indicate the eMBB data.

In the two-stage DCI scheduling structure shown in FIG. 3, the downlink scheduling information of the URLLC data is located in the second-stage DCI. When performing encoding, a transmitting device may encode the URLLC data as an information field in the second-stage DCI. When performing decoding, a receiving device needs to first decode the second-stage DCI once to obtain the downlink scheduling information of the URLLC data, and determine, based on the downlink scheduling information of the URLLC data, whether the URLLC data is retransmitted data; and if determining that the URLLC data is the retransmitted data, perform a soft merge once, resulting in a long decoding delay. Alternatively, when performing encoding, a transmitting device may separately encode the URLLC data and the downlink scheduling information of the URLLC data. When performing decoding, a receiving device needs to first decode the downlink scheduling information of the URLLC data, and decode the URLLC data based on the downlink scheduling information of the URLLC data, resulting in a long delay. In addition, when the transmitting device performs encoding, the URLLC data has a short code length and therefore low reliability.

In conclusion, how to encode a short code in the two-stage DCI scheduling structure for multi-service multiplexing, to improve decoding performance and improve communication reliability becomes an urgent technical problem to be resolved.

To resolve the foregoing technical problem, embodiments of this application provide a communication method. In the method, a transmitting device may send first-stage control information, where the first-stage control information includes scheduling information of second-stage control information, and the scheduling information of the second-stage control information includes scheduling information of first data; and the transmitting device may further send the second-stage control information, where the second-stage control information is determined based on a first joint encoding result of the first data and first information, and the first information is second control information of second data.

In embodiments of this application, a short code (for example, the first data) may be encoded and transmitted based on a two-stage DCI scheduling structure for multi-service multiplexing. The transmitting device adds the scheduling information of the first data to the first-stage control information, so that a scheduling delay of the first data can be reduced, thereby reducing a decoding delay of the first data. In addition, the transmitting device may further perform first joint encoding on the first data and the first information, to achieve a long code gain, improve decoding performance, and improve communication reliability.

The following describes implementations of embodiments of this application in detail with reference to accompanying drawings in this specification.

The communication method provided in embodiments of this application may be used in any communication system. The communication system may be a 3GPP communication system, for example, a long term evolution (long term evolution, LTE) system, or may be an NR system or an NR vehicle-to-everything (vehicle-to-everything, V2X) system in 5G. The communication method may also be used in a system with hybrid networking of LTE and 5G, a device-to-device (device-to-device, D2D) communication system, a machine-to-machine (machine-to-machine, M2M) communication system, internet of things (internet of Things, IoT), narrowband internet of things (narrowband internet of things, NB-IoT), a global system for mobile communications (global system for mobile communications, GSM), an enhanced data rates for GSM evolution (enhanced data rates for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronous code division multiple access, TD-SCDMA) system, a frequency division duplex (frequency division duplex, FDD) system, a time division duplex (time division duplex, TDD) system, a satellite communication system, a wireless projection communication system, an integrated access and backhaul communication system, and another next-generation communication system (for example, a 6G communication system). The communication system may alternatively be a non-3GPP communication system. This is not limited.

The communication method provided in embodiments of this application may be used in various communication scenarios, for example, may be used in one or more of the following communication scenarios: a service scenario requiring low latency and high reliability, eMBB, URLLC, machine type communication (machine type communication, MTC), massive machine type communication (massive machine type communication, mMTC), enhanced machine type communication (enhanced machine type communication, eMTC), IoT, narrowband internet of things (narrowband internet of things, NB-IoT), customer premises equipment (customer premises equipment, CPE), augmented reality (augmented reality, AR), virtual reality (virtual reality, VR), D2D, V2X, and vehicle-to-vehicle (vehicle-to-vehicle, V2V).

Embodiments of this application are applicable to both a homogeneous network scenario and a heterogeneous network scenario, and have no limitation on transmission points, which may be applied to coordinated multi-point transmission between macro base stations, between micro base stations, and between a macro base station and a micro base station, and are applicable to a frequency division multiplex system, a time division multiplex system, a duplex system, an access and backhaul system, a relay system, and the like. Embodiments of this application are applicable to a low-frequency scenario (sub 6G), a high-frequency scenario (above 6G), terahertz, optical communication, and the like. This is not limited.

The communication system provided in embodiments of this application may include one or more network devices and one or more terminal devices.

The following uses FIG. 4 to FIG. 8 as examples to describe the communication system provided in embodiments of this application.

FIG. 4 is a diagram of a satellite communication system according to an embodiment of this application. As shown in FIG. 4, the satellite communication system may include a satellite, a terminal device, and a network device.

The satellite may serve as a network device to provide a communication service for the terminal device. To be specific, the satellite may transmit downlink data to the terminal device (the satellite is a transmitting device, and the terminal device is a receiving device), where the downlink data is channel-encoded, and channel-encoded data is transmitted to the terminal device after being constellation-modulated; or the terminal device may transmit uplink data to the satellite, where the uplink data may be channel-encoded, and encoded data is transmitted to the satellite after being constellation-modulated. Alternatively, the satellite may serve as a terminal device to communicate with the network device (the network device is a transmitting device, and the satellite is a receiving device). This is not limited.

The satellite in FIG. 4 may be an unmanned aerial vehicle, a hot air balloon, a geostationary orbit satellite, a non-geostationary orbit satellite, a low-orbit satellite, a medium-orbit satellite, a high-orbit satellite, a geosynchronous orbit satellite, an unmanned aerial system platform, or the like. Alternatively, the satellite may be a non-terrestrial base station or a non-terrestrial device, or the like. This is not limited.

The terminal device in FIG. 4 may be a device with a wireless transceiver function or a chip or a chip system that may be disposed in the device, may allow a user to access a network, and is a device configured to provide voice and/or data connectivity for the user. The terminal device may also be referred to as user equipment (user equipment, UE), a subscriber unit (subscriber unit), a terminal (terminal), a mobile station (mobile station, MS), a mobile terminal (mobile terminal, MT), or the like.

For example, the terminal device in FIG. 4 may be a mobile phone (mobile phone), a notebook computer, a tablet computer, or a computer with a wireless transceiver function. Alternatively, the terminal device may be a user station, a mobile station, a remote station, a remote terminal device, a mobile terminal device, a user terminal device, a wireless communication device, a user agent, a user apparatus, a cellular phone, a cordless phone, a session initiation protocol (session initiation protocol, SIP) phone, a smartphone, a wireless data card, a wireless local loop (wireless local loop, WLL) station, a personal digital assistant (personal digital assistant, PDA), a handheld device with a wireless communication function, a computing device, a processing device connected to a wireless modem, a vehicle-mounted device, a wearable device (such as a smartwatch), a terminal device in internet of things, a home appliance, a virtual reality (virtual reality, VR) terminal, an augmented reality (augmented reality, AR) terminal, a wireless terminal in industrial control, a wireless terminal in self-driving, a wireless terminal in telemedicine, a wireless terminal in smart grid, a wireless terminal in smart city (smart city), a wireless terminal in smart home (smart home), a vehicle with a vehicle-to-vehicle (vehicle-to-vehicle, V2V) communication capability, an intelligent vehicle, an unmanned aerial vehicle with a UAV-to-UAV (UAV-to-UAV, U2U) communication capability, a terminal device in a future network, a terminal device in a future evolved public land mobile network (public land mobile network, PLMN), or the like. This is not limited.

The network device in FIG. 4 may be any device that is deployed in an access network and that can perform wireless communication with the terminal device, or may be a chip or a chip system that may be disposed in the device, or may be a logical node, a logical module, or a function implemented by software, and may be configured to implement functions such as a radio physical control function, resource scheduling and radio resource management, radio access control, and mobility management. Specifically, the network device may be a device supporting wired access, or may be a device supporting wireless access.

For example, the network device may include one or more access network (access network, AN)/radio access network (radio access network, RAN) nodes. The AN/RAN node may be a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a macro base station configured to provide a macro cell (macro cell), a micro base station configured to provide a pico cell (pico cell), a femto base station configured to provide a femto cell (femto cell), a baseband unit (baseband unit, BBU), or a wireless fidelity (wireless fidelity, Wi-Fi) access point (access point, AP). This is not limited.

For another example, the network device may be a device including a central unit (central unit, CU) node, a distributed unit (distributed unit, DU) node, or a CU node and a DU node. For example, the network device may be divided into a CU and a DU from a perspective of logical functions. Some protocol layer functions are centrally controlled in the CU, while the remaining or all protocol layer functions are distributed in the DU. The DU is centrally controlled by the CU. Further, the central unit CU may be divided into a control plane (CU-CP) and a user plane (CU-UP). In different systems, a CU (including a CU-CP or a CU-UP) or a DU may have different names. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP.

For still another example, the network device may include a baseband unit (baseband unit, BBU) and a remote radio unit (remote radio unit, RRU). The BBU and the RRU may be placed in different places. For example, the RRU is remotely placed in a heavy-traffic area, while the BBU is placed in a central equipment room. Alternatively, the BBU and the RRU may be placed in a same equipment room. Alternatively, the BBU and the RRU may be different components in a rack. This is not limited.

FIG. 5 is a diagram of an inter-satellite link communication system according to an embodiment of this application. The inter-satellite link communication system may include an acquisition, pointing, and tracking (acquisition, pointing, and tracking, APT) subsystem and a communication subsystem. The APT subsystem and the communication subsystem are independent systems.

The communication subsystem may be responsible for inter-satellite information transmission, and is a main body of the inter-satellite link communication system. Most of communication subsystems are optical communication systems, but some are microwave band systems, and most use a single high-gain antenna.

The APT subsystem may be responsible for acquisition, pointing, and tracking between satellites, that is, determining a direction of arrival of an incident signal, which is acquisition; adjusting a transmit wave to aim at a receiving direction, which is pointing; and continuously adjusting pointing and acquisition in an entire communication process, which is tracking. To minimize impact of attenuation and interference in a channel and require high confidentiality and a high transmission rate, the APT subsystem needs to be adjusted in real time to constantly adapt to changes. The APT subsystem is an optical system, and optical pointing is difficult. Therefore, a direction needs to be adjusted mechanically.

As shown in FIG. 5, the inter-satellite link communication system may include a plurality of satellites (for example, a satellite 1 and a satellite 2, where any two satellites may be a transmitting device and a receiving device for each other). The satellite may include a communication module, a transceiver antenna, an APT module, and an APT transmit/receive module. Signaling exchange and data transmission may be performed between satellites through an Xn interface.

It may be understood that, for descriptions of the satellite, refer to the related descriptions of the satellite in FIG. 4. Details are not described again.

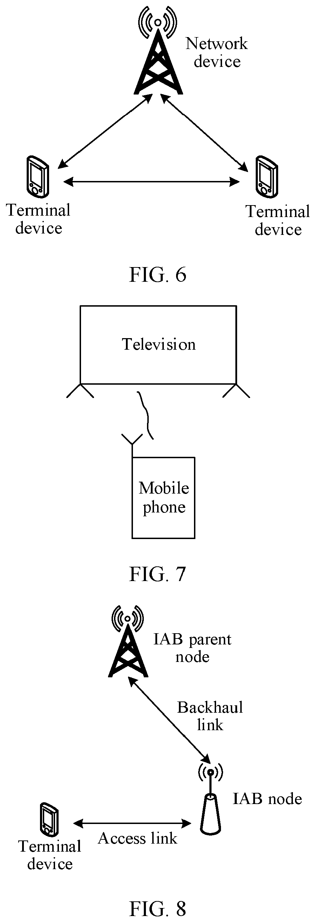

FIG. 6 is a diagram of a cellular communication system according to an embodiment of this application. As shown in FIG. 6, the cellular communication system may include a network device and a terminal device. The network device may communicate with the terminal device (the network device is a transmitting device, and the terminal device is a receiving device), or the terminal device may communicate with another terminal device (the terminal device and the another terminal device may be a transmitting device and a receiving device for each other).

The cellular communication system may include a plurality of cells, each cell may include one network device, and the network device may provide a communication service for one or more terminal devices. The terminal device may be within cell coverage of the network device. The terminal device may communicate with the network device over an air interface through an uplink (uplink, UL) or a downlink (downlink, DL). In a UL direction, the terminal device may send data to the network device through a physical uplink shared channel (physical uplink shared channel, PUSCH), or may send a physical uplink control channel (physical uplink control channel, PUCCH) to the network device. In a DL direction, the network device may send a PDCCH carrying DCI to the terminal device, or may send data to the terminal device through a PDSCH.

It may be understood that, for related descriptions of the network device and the terminal device, refer to the related descriptions of the network device and the terminal device in FIG. 4. Details are not described again.

FIG. 7 is a diagram of a wireless projection communication system according to an embodiment of this application. In the wireless projection communication system, a picture of a terminal device (such as a mobile phone, a tablet, a laptop, or a computer) may be displayed on a screen of another terminal device (such as a tablet, a laptop, a computer, a television, an all-in-one machine, or a projector) "in real time", and displayed content may include various types of media information and real-time operation pictures.

As shown in FIG. 7, for example, the wireless projection communication system includes a television and a mobile phone. A picture on the mobile phone may be displayed on a screen of the television in real time (the mobile phone is a transmitting device, and the television is a receiving device).

FIG. 8 is a diagram of an integrated access and backhaul (integrated access and backhaul, IAB) communication system according to an embodiment of this application. As shown in FIG. 8, the IAB communication system may include an IAB parent node, an IAB node, and a terminal device. A link between the IAB parent node and the IAB node may be referred to as a backhaul link (backhaul link), and a node between the IAB node and the terminal device may be referred to as an access link (access link). When the IAB parent node communicates with the IAB node, the IAB parent node may serve as a transmitting device, and the IAB node may serve as a receiving device. When the IAB node communicates with the terminal device, the IAB node may serve as a transmitting device, and the terminal device may serve as a receiving device.

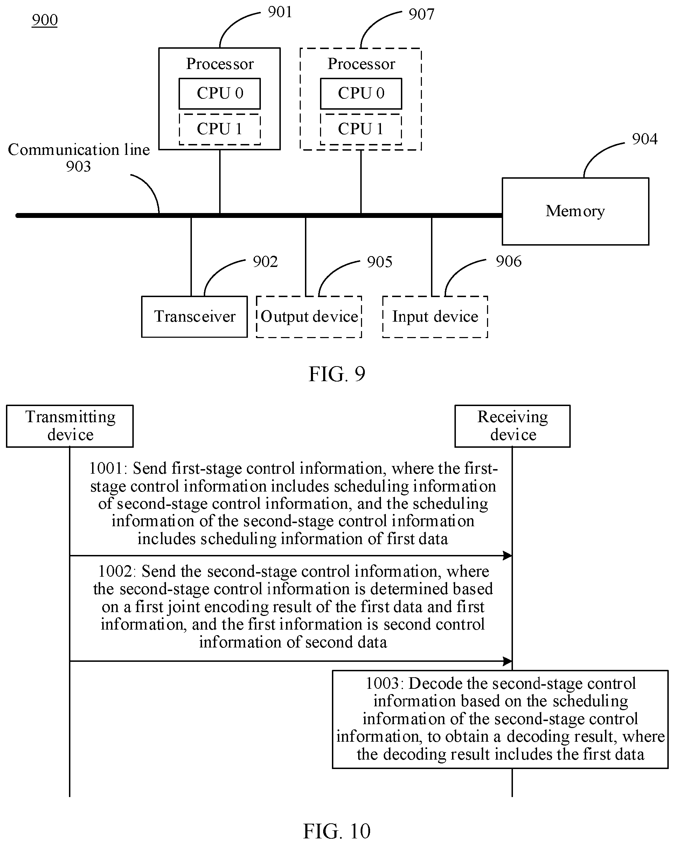

During specific implementation, as shown in FIG. 4 to FIG. 8, various network devices and terminal devices may use a composition structure shown in FIG. 9, or include components shown in FIG. 9, which is a diagram of composition of a communication apparatus 900 according to an embodiment of this application. The communication apparatus 900 may be a network device or a chip or a system-on-a-chip in the network device; or may be a terminal device or a chip or a system-on-a-chip in the terminal device. As shown in FIG. 9, the communication apparatus 900 includes a processor 901, a transceiver 902, and a communication line 903.

Further, the communication apparatus 900 may further include a memory 904. The processor 901, the memory 904, and the transceiver 902 may be connected through the communication line 903.

The processor 901 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 901 may be another apparatus with a processing function, for example, a circuit, a component, or a software module. This is not limited.

The transceiver 902 is configured to communicate with another device or another communication network. The another communication network may be an Ethernet, a radio access network (radio access network, RAN), a wireless local area network (wireless local area network, WLAN), or the like. The transceiver 902 may be a module, a circuit, a transceiver, or any apparatus that can implement communication.

The communication line 903 is configured to transfer information between the components included in the communication apparatus 900.

The memory 904 is configured to store instructions. The instructions may be computer programs.

The memory 904 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, or the like), a magnetic disk storage medium or another magnetic storage device, or the like. This is not limited.

It should be noted that the memory 904 may exist independently of the processor 901, or may be integrated with the processor 901. The memory 904 may be configured to store instructions, program code, some data, or the like. The memory 904 may be located inside the communication apparatus 900, or may be located outside the communication apparatus 900. This is not limited. The processor 901 is configured to execute the instructions stored in the memory 904, to implement a communication method provided in the following embodiments of this application.

In an example, the processor 901 may include one or more CPUs, for example, a CPU 0 and a CPU 1 in FIG. 9.

In an optional implementation, the communication apparatus 900 includes a plurality of processors. For example, in addition to the processor 901 in FIG. 9, the communication apparatus 900 may further include a processor 907.

In an optional implementation, the communication apparatus 900 further includes an output device 905 and an input device 906. For example, the input device 906 is a device such as a keyboard, a mouse, a microphone, or a joystick, and the output device 905 is a device such as a display or a speaker (speaker).

It should be noted that the communication apparatus 900 may be a desktop computer, a portable computer, a network server, a mobile phone, a tablet computer, a wireless terminal, an embedded device, a chip system, or a device with a structure similar to that in FIG. 9. In addition, the composition structure shown in FIG. 9 does not constitute a limitation on the communication apparatus. In addition to the components shown in FIG. 9, the communication apparatus may include more or fewer components than those shown in the figure, or combine some components, or have different component arrangements.

In embodiments of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

With reference to the communication system shown in any one of FIG. 4 to FIG. 8, the communication method provided in embodiments of this application may be described in detail with reference to FIG. 10. Both a network device and a terminal device described in the following embodiments may have the components shown in FIG. 9. Processing performed by a single execution entity shown in embodiments of this application may alternatively be performed by a plurality of execution entities. These execution entities may be logically and/or physically separated. This is not limited.

FIG. 10 is a flowchart of a communication method according to an embodiment of this application. As shown in FIG. 10, the method may include the following steps.

Step 1001: A transmitting device sends first-stage control information, and correspondingly, a receiving device receives the first-stage control information from the transmitting device.

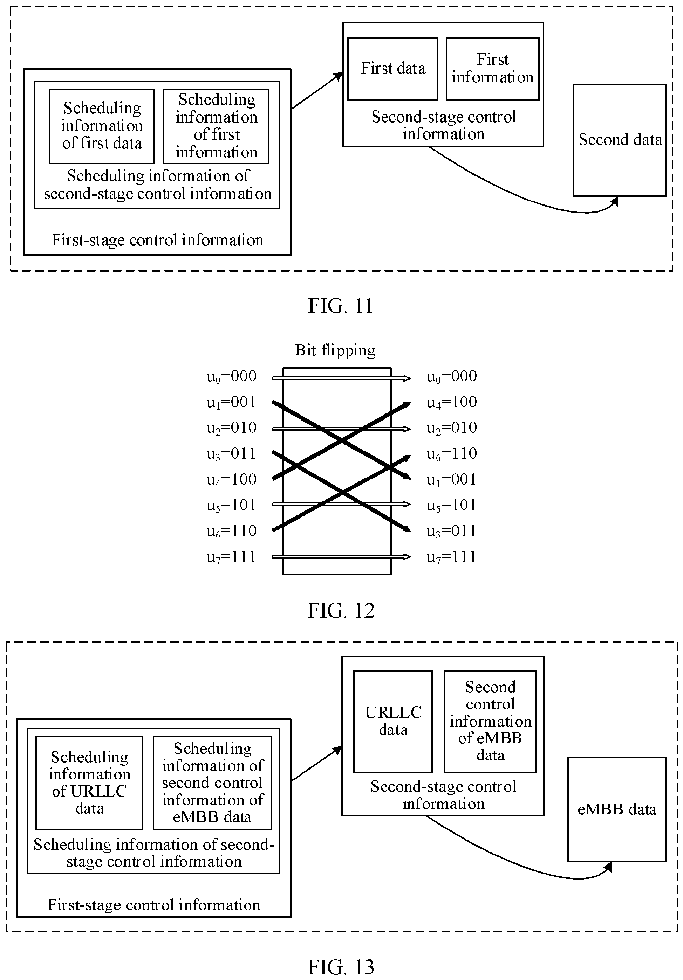

As shown in FIG. 11, the first-stage control information may include scheduling information of second-stage control information, and the first-stage control information may be used to schedule the second-stage control information.

The transmitting device may be a device that may send data, such as a network device or a terminal device. The receiving device may be a device that may receive data, such as a terminal device. This is not limited.

For example, the transmitting device may be a network device, the receiving device may be a terminal device, the first-stage control information may be first-stage DCI, and the second-stage control information may be second-stage DCI. Alternatively, the transmitting device may be a terminal device, the receiving device may be a terminal device, the first-stage control information may be first-stage sidelink control information (sidelink control information, SCI), and the second-stage control information may be second-stage SCI. The first-stage SCI may also be referred to as SCI-1 or 1^{st} SCI, and the second-stage SCI may also be referred to as SCI-2 or 2^{nd} SCI. This is not limited.

Optionally, the transmitting device may obtain first data and second data, and determine the first-stage control information based on the first data and the second data.

The first data and the second data may be service data of different service types. The first data may be short code data. For example, the first data may be low-latency and high-reliability service data. For example, the first data may be URLLC data. The second data may be long code data. For example, the second data may be low-reliability service data. For example, the second data may be eMBB data.

As shown in FIG. 11, the scheduling information of the second-stage control information may include scheduling information of the first data. The transmitting device adds the scheduling information of the first data to the first-stage control information, so that a scheduling delay of the first data can be reduced. This helps quickly decode the first data, reduce a decoding delay, and improve decoding performance.

Optionally, as shown in FIG. 11, the scheduling information of the second-stage control information may further include scheduling information of first information, and the first information is second control information of the second data. The transmitting device adds the scheduling information of the first information to the first-stage control information, so that a scheduling delay of the first information can be reduced. This helps quickly decode the first information, reduce a decoding delay, and improve decoding performance.

For example, the scheduling information may include one or more of the following: port configuration information, a demodulation reference signal (demodulation reference signal, DMRS) initialization sequence (DMRS sequence initialization), an MCS, a redundancy version (redundancy version, RV), a new data indicator (new data indicator, NDI), a quantity of hybrid automatic repeat request (hybrid automatic repeat request, HARQ) processes, or a downlink assignment index (downlink assignment index, DAI).

A port may also be referred to as an antenna port, a physical antenna port, a reference signal port, or the like. The port configuration information and the DMRS initialization sequence may also be referred to as channel estimation-related signaling. The port configuration information, the DMRS initialization sequence, the MCS, and the RV may also be referred to as data decoding-related signaling. The NDI, the quantity of HARQ processes, and the DAI may also be referred to as pilot-related signaling.

In a possible design, the transmitting device may separately indicate the scheduling information of the first data and the scheduling information of the first information in the first-stage control information.

For example, the first-stage control information may include one or more of the following: port configuration information of the first data, an MCS of the first data, an RV of the first data, an NDI of the first data, a quantity of HARQ processes of the first data, or a DAI of the first data. The first-stage control information may further include one or more of the following: port configuration information of the first information, an MCS of the first information, an RV of the first information, an NDI of the first information, a quantity of HARQ processes of the first information, or a DAI of the first information.

In another possible design, the transmitting device may alternatively jointly indicate scheduling information shared by the first data and the first information, and separately indicate scheduling information exclusive to the first data and scheduling information exclusive to the first information in the first-stage control information, to reduce signaling overheads.

For example, refer to step 1002. The transmitting device may use the first data as an information field in the second-stage control information, and perform first joint encoding on the first data and the first information. In other words, the transmitting device performs encoding once, and one MCS and one RV are used to decode the second-stage control information. In other words, the first data and the first information may share the MCS and the RV.

For example, the first-stage control information may include one or more of the following: port configuration information, an MCS, or an RV. The first-stage control information may further include one or more of the following: an NDI of the first data, a quantity of HARQ processes of the first data, or a DAI of the first data. The first-stage control information may further include one or more of the following: an NDI of the first information, a quantity of HARQ processes of the first information, or a DAI of the first information. The port configuration information, the MCS, or the RV is the scheduling information shared by the first data and the first information.

Optionally, the first-stage control information may further include one or more of the following: first indication information, time-frequency resource information of the second-stage control information, length information of the first data, mapping information from a virtual resource block (virtual resource block, VRB) to a physical resource block (physical resource block, PRB), PUCCH signaling of the first data, or physical sidelink feedback channel (physical sidelink feedback channel, PSFCH) signaling of the first data.

The first indication information may indicate that the second-stage control information including the first data exists.

For example, the first indication information may be 1 bit. A value of the 1 bit may be set to 1 to indicate that the second-stage control information including the first data exists, or a value of the 1 bit may be set to 0 to indicate that the second-stage control information including the first data does not exist. Alternatively, a value of the 1 bit may be set to 0 to indicate that the second-stage control information including the first data exists, or a value of the 1 bit may be set to 1 to indicate that the second-stage control information including the first data does not exist.

For another example, the first indication information may alternatively include a plurality of bits. A value of the plurality of bits may be set to a specific value to indicate that the second-stage control information including the first data exists. Alternatively, a value of the plurality of bits may be set to other values to indicate other meanings.

For example, the first indication information includes two bits. A value of the two bits may be set to 10 to indicate that the second-stage control information including the first data exists, or a value of the two bits may be set to 00 to indicate that the second-stage control information does not exist, or a value of the two bits may be set to 01 to indicate that the second-stage control information exists (the second-stage control information may not include the first data).

If the transmitting device sets the value of the first indication information to 10 to indicate that the second-stage control information including the first data exists, the receiving device may receive the second-stage control information, and decode the second-stage control information with reference to step 1003. If the transmitting device sets the value of the first indication information to 00 to indicate that the second-stage control information does not exist, the receiving device may directly receive the second data. If the transmitting device sets the value of the first indication information to 01 to indicate that the second-stage control information exists, the receiving device may receive the second-stage control information, and decode the second-stage control information in a predefined manner.

The length information of the first data may be a specific value of a length of the first data (for example, a quantity of bits occupied by the first data). Alternatively, the length information of the first data may be a ratio of a length of the first data to a length of the second-stage control information. The transmitting device may determine the ratio based on the length of the first data and the length of the second-stage control information. The receiving device may determine the length of the second-stage control information based on the time-frequency resource information of the second-stage control information, and then determine a specific value of the length of the first data based on the length of the second-stage control information and the ratio. Compared with sending the specific value of the length of the first data, sending the ratio can reduce signaling overheads.

Optionally, the length information of the first data may alternatively be other information that may indicate a length of the first data. This is not limited.

Optionally, the length information of the first data may alternatively be configured by the transmitting device for the receiving device by using radio resource control (radio resource control, RRC) signaling. This is not limited.

Optionally, the transmitting device may further indicate time-frequency resource information of the first information by using the first-stage control information. For a manner of indicating a time-frequency resource of the first information, refer to the foregoing manner of indicating the length of the first data. Details are not described again.

The PUCCH signaling of the first data may include one or more of the following: a transmit power control (transmit power control, TPC) command for a scheduled PUCCH (TPC command for scheduled PUCCH), a PUCCH resource indicator (PUCCH resource indicator), a PDSCH-to-HARQ feedback timing indicator (PDSCH-to-HARQ_feedback timing indicator), a sounding reference signal request (sounding reference signal request, SRS request), or a priority indicator (priority indicator).

Optionally, when the first-stage control information is the first-stage DCI, the first-stage DCI may include the PUCCH signaling of the first data. When the first-stage control information is the first-stage SCI, the first-stage SCI may include the PSFCH signaling of the first data.

Based on the foregoing description of the first-stage control information, the receiving device may determine a quantity of bits of the first-stage control information based on predefined configuration information or configuration information delivered by the transmitting device, and perform blind detection on the first-stage control information based on the quantity of bits, thereby reducing blind detection complexity.

Optionally, for example, the first data is data of a first service, and the second data is data of a second service. A receiving device associated with the first service and a receiving device associated with the second service may receive, by using a same radio network temporary identifier (radio network temporary identifier, RNTI), the first-stage control information sent by the transmitting device. Alternatively, a receiving device associated with a plurality of services (for example, associated with both the first service and the second service) may receive, by using an RNTI of the receiving device, the first-stage control information sent by the transmitting device.

Step 1002: The transmitting device sends the second-stage control information, and correspondingly, the receiving device receives the second-stage control information from the transmitting device.

As shown in FIG. 11, the second-stage control information may be determined based on a first joint encoding result of the first data and the first information. In other words, the transmitting device may perform first joint encoding on the first data and the first information, to obtain the second-stage control information. Alternatively, it may be described that the second-stage control information includes the first data and the first information, that is, the first data and the first information are located in the information field in the second-stage control information, or it may be described that the first data and the first information are used as some fields in the second-stage control information.

The transmitting device may perform first joint encoding on the first data and the first information, to achieve a long code gain, improve decoding performance, and improve communication reliability.

In a possible design, the first data may be located in the first N bits ranked in descending order of decoding orders in the second-stage control information, where N is a positive integer.

The transmitting device maps the first data to the first N bits ranked in descending order of decoding orders in the second-stage control information, so that when decoding the second-stage control information, the receiving device can determine the first N bits ranked in descending order of decoding orders in the second-stage control information as the first data, thereby preferentially decoding the first data, reducing a decoding delay of the first data, and improving decoding performance.

For example, the transmitting device may map the first data to the first N bits ranked in descending order of decoding orders in the second-stage control information in a bit flipping manner.

For example, as shown in FIG. 12, the transmitting device may flip u₀, u₁, u₂, u₃, u₄, u₅, u₆, and u₇ to u₀, u₄, u₂, u₆, u₁, u₅, u₃, and u₇ in descending order of decoding orders in the bit flipping manner.

In another possible design, similar to that the transmitting device maps the first data to the first N bits ranked in descending order of decoding orders in the second-stage control information in the bit flipping manner, when the transmitting device does not process the first data in the bit flipping manner, the receiving device may perform bit flipping on the second-stage control information in the bit flipping manner when receiving the second-stage control information, to obtain a bit flipping result, and determine the first N bits ranked in descending order of decoding orders in the bit flipping result as the first data, thereby preferentially decoding the first data, reducing a decoding delay of the first data, and improving decoding performance.

Optionally, the transmitting device may further send fifth indication information to the receiving device, to indicate whether the transmitting device performs bit flipping. Alternatively, whether the transmitting device performs bit flipping may be indicated in a manner predefined in a protocol.

Optionally, the transmitting device may add the fifth indication information to the first-stage control information and send the first-stage control information to the receiving device.

Optionally, the second-stage control information may further include cyclic redundancy check (cyclic redundancy check, CRC) information, the CRC information is located in an (N+1)^{th} bit to an (N+M)^{th} bit ranked in descending order of decoding orders in the second-stage control information, where M is a positive integer, and the CRC information is used to check the first data.

The transmitting device may further add the CRC information to the second-stage control information, to assist the receiving device in determining whether the first data is correctly decoded. The transmitting device adds the CRC information to the (N+1)^{th} bit to the (N+M)^{th} bit ranked in descending order of decoding orders in the second-stage control information, so that the receiving device can decode the CRC information after decoding the first data, thereby quickly determining whether the first data is correctly decoded, reducing a decoding delay, and improving decoding performance.

Optionally, the transmitting device may further send sixth indication information to the receiving device, to indicate whether the second-stage control information includes the CRC information. Alternatively, whether the second-stage control information includes the CRC information may be indicated in a manner predefined in a protocol.

Optionally, the transmitting device may add the sixth indication information to the first-stage control information and send the first-stage control information to the receiving device.

Optionally, the first information in the second-stage control information may include one or more of the following: time-frequency resource information of the second data, scheduling information of the second data, PUCCH signaling of the second data, or PSFCH signaling of the second data.

The scheduling information of the second data may include one or more of the following: port configuration information, a DMRS initialization sequence, an MCS, an RV, an NDI, a quantity of HARQ processes, or a DAI.

The PUCCH signaling of the second data may include one or more of the following: a TPC command for a scheduled PUCCH, a PUCCH resource indicator, a PDSCH-to-HARQ feedback timing indicator, or an SRS request.

Optionally, when the second-stage control information is the second-stage DCI, the first information may include the PUCCH signaling of the second data. When the second-stage control information is the second-stage SCI, the first information may include the PSFCH signaling of the second data.

Based on the foregoing descriptions of the first data and the first information, for example, as shown in FIG. 13, the first data is the URLLC data, and the second data is the eMBB data. The first information may be second control information of the eMBB data, and the second-stage control information may include the URLLC data and the second control information of the eMBB data.

Optionally, the second-stage control information further includes one or more of the following: second indication information, the PUCCH signaling of the first data, or the PSFCH signaling of the first data.

The second indication information may indicate a format of the second-stage control information. The format of the second-stage control information may indicate a field type included in the second-stage control information, a length of each field, and the like. The receiving device may interpret the received second-stage control information based on the format indicated by the second indication information.

For example, the second-stage control information corresponding to a format 1 may include the first data and the first information. The second-stage control information corresponding to a format 2 may include the first data, the first information, and the PUCCH signaling of the first data. The second-stage control information corresponding to a format 3 includes the first data, the first information, and the PSFCH signaling of the first data.

Optionally, when encoding the PUCCH signaling of the first data, the transmitting device may make a priority of a decoding order of the PUCCH signaling of the first data lower than a priority of a decoding order of the first data; and/or make the priority of the decoding order of the PUCCH signaling of the first data higher than a priority of a decoding order of the first information. Therefore, after decoding the first data, the receiving device decodes the PUCCH signaling of the first data, thereby reducing a decoding delay of the first data, and improving decoding performance.

Optionally, when encoding the PSFCH signaling of the first data, the transmitting device may make a priority of a decoding order of the PSFCH signaling of the first data lower than a priority of a decoding order of the first data; and/or make the priority of the decoding order of the PSFCH signaling of the first data higher than a priority of a decoding order of the first information. Therefore, after decoding the first data, the receiving device decodes the PSFCH signaling of the first data, thereby reducing a decoding delay of the first data, and improving decoding performance.

Step 1003: The receiving device decodes the second-stage control information based on the scheduling information of the second-stage control information, to obtain a decoding result.

The decoding result may include the first data.

Optionally, the decoding result may further include the first information.

The receiving device may perform first joint decoding on the first data and the second-stage control information, to obtain the decoding result.

Specifically, when performing first joint decoding on the first data and the second-stage control information, the receiving device may first decode the first data, and then decode the first information.

Optionally, for example, the first data is the data of the first service, and the second data is the data of the second service. The receiving device associated with the first service may discard the first information when obtaining the first data and the first information through decoding. When obtaining the first data and the first information through decoding, the receiving device associated with the second service may continue to receive the second data based on the first information.

Based on the method shown in FIG. 10, a short code (for example, the first data) may be encoded and transmitted based on a two-stage DCI scheduling structure for multi-service multiplexing. The transmitting device adds the scheduling information of the first data to the first-stage control information, so that a scheduling delay of the first data can be reduced, thereby reducing a decoding delay of the first data. In addition, the transmitting device may further perform first joint encoding on the first data and the first information, to achieve a long code gain, improve decoding performance, and improve communication reliability.

Based on the method shown in FIG. 10, optionally, as shown in FIG. 11, the transmitting device may further send the second data to the receiving device, and the receiving device decodes the second data based on the first information.

Based on the method shown in FIG. 10, optionally, the transmitting device may further add retransmission indication configuration information to the first-stage control information. The retransmission indication configuration information may indicate one or more of the following: retransmitted content, a quantity of retransmissions, or a retransmission resource.

The retransmitted content may be the first data and/or the second-stage control information. The quantity of repetitions may be a quantity of repetitions of the retransmitted content. The retransmission resource may be a retransmission resource of the retransmitted content.

For example, 00 may indicate that there is no repetition, 01 may indicate that there is one repetition, 10 may indicate that there are two repetitions, and 11 may indicate that the quantity of repetitions is determined based on an RRC configuration.

The retransmission indication configuration information may directly indicate the retransmission resource of the retransmitted content, for example, may directly indicate a time-frequency resource of the retransmitted content. Alternatively, the retransmission indication configuration information may indirectly indicate the retransmission resource of the retransmitted content, for example, may indicate an association relationship between the retransmission resource of the retransmitted content and a time-frequency resource of the first data and/or a time-frequency resource of the second-stage control information. This is not limited.

Optionally, the retransmission resource may alternatively be indicated in a manner predefined in a protocol.

Based on the foregoing description of the retransmission indication configuration information, when retransmitting the retransmitted content, the transmitting device may perform retransmission through frequency domain alignment and time domain repetition, or may perform retransmission through time domain alignment and frequency domain repetition, or may perform retransmission in another specific retransmission manner. This is not limited.

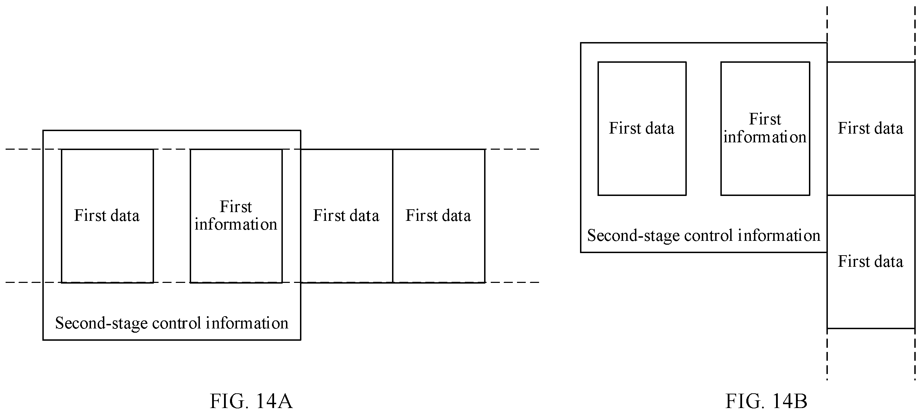

For example, the retransmitted content is the first data. As shown in FIG. 14A, the transmitting device may retransmit the first data through frequency domain alignment and time domain repetition. Alternatively, as shown in FIG. 14B, the transmitting device may retransmit the first data through time domain alignment and frequency domain repetition, to improve reliability of the first data by using a small quantity of retransmission resources.

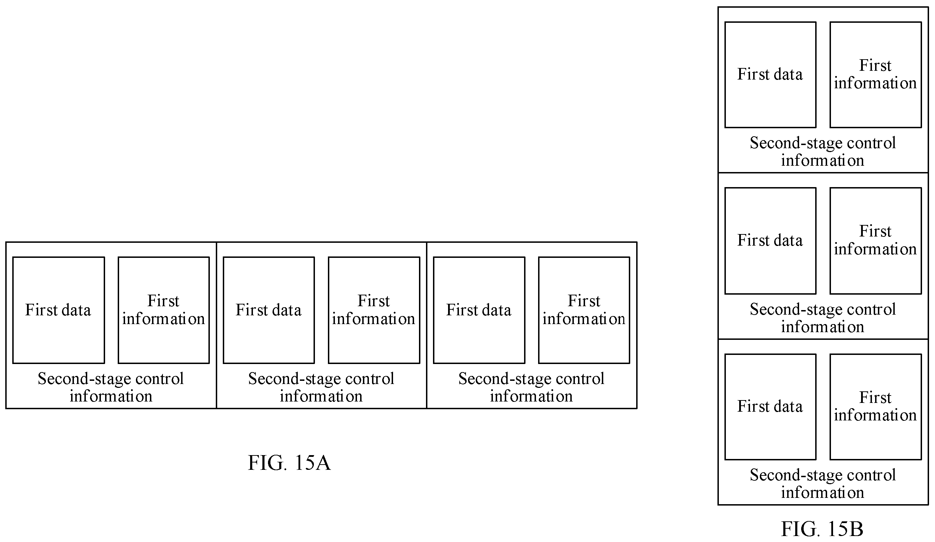

For another example, the retransmitted content is the second-stage control information. As shown in FIG. 15A, the transmitting device may retransmit the second-stage control information through frequency domain alignment and time domain repetition. Alternatively, as shown in FIG. 15B, the transmitting device may retransmit the second-stage control information through time domain alignment and frequency domain repetition, to improve reliability of the second-stage control information.

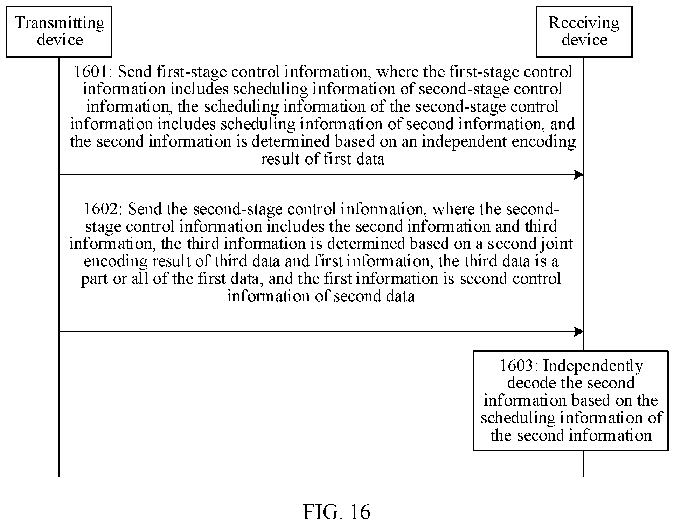

Different from FIG. 10 to FIG. 15A and FIG. 15B in which the transmitting device performs first joint encoding on the first data and the first information to obtain the second-stage control information, in FIG. 16, a transmitting device may independently encode first data to obtain second information, perform second joint encoding on third data and first information to obtain third information, and determine second-stage control information based on the second information and the third information.

FIG. 16 is a flowchart of a communication method according to an embodiment of this application. As shown in FIG. 16, the method may include the following steps.

Step 1601: A transmitting device sends first-stage control information, and correspondingly, a receiving device receives the first-stage control information from the transmitting device.

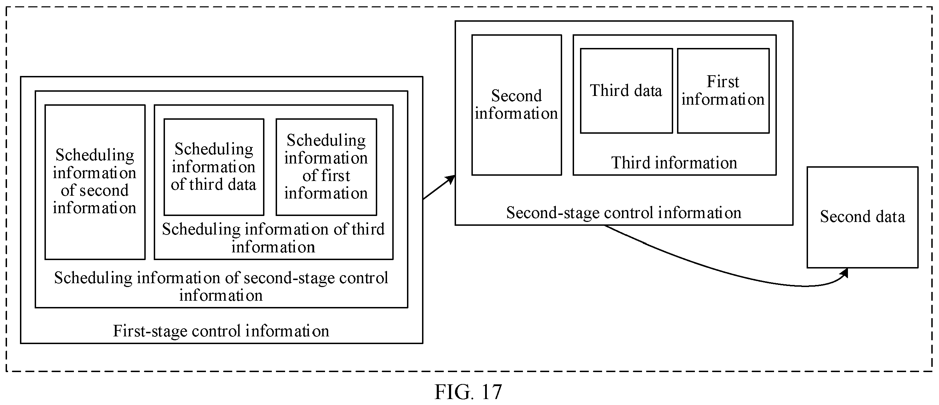

As shown in FIG. 17, the first-stage control information may include scheduling information of second-stage control information, and the first-stage control information may be used to schedule the second-stage control information.

Optionally, the transmitting device may obtain first data and second data, and determine the first-stage control information based on the first data and the second data.

As shown in FIG. 17, the scheduling information of the second-stage control information may include scheduling information of second information, and the second information may be determined based on an independent encoding result of the first data. In other words, the transmitting device may independently encode the first data, to obtain the second information. The transmitting device adds the scheduling information of the second information to the first-stage control information, so that a scheduling delay of the first data can be reduced. This helps quickly decode the first data, reduce a decoding delay, and improve decoding performance.

Optionally, as shown in FIG. 17, the scheduling information of the second-stage control information may further include scheduling information of third information. The third information may be determined based on a second joint encoding result of third data and first information. In other words, the transmitting device may perform second joint encoding on the third data and the first information, to obtain the third information. The transmitting device adds the scheduling information of the third information to the first-stage control information, so that a scheduling delay of the third information can be reduced. This helps quickly decode the third information, reduce a decoding delay, and improve decoding performance.

The scheduling information of the third information may include scheduling information of the third data and scheduling information of the first information, the third data is a part or all of the first data, and the first information is second control information of the second data.

For example, the scheduling information may include one or more of the following: port configuration information, a DMRS initialization sequence, an MCS, an RV, an NDI, a quantity of HARQ processes, or a DAI.

In a possible design, the transmitting device may separately indicate the scheduling information of the second information and the scheduling information of the third information in the first-stage control information.

For example, the first-stage control information may include one or more of the following: port configuration information of the second information, an MCS of the second information, an RV of the second information, an NDI of the second information, a quantity of HARQ processes of the second information, or a DAI of the second information. The first-stage control information may further include one or more of the following: port configuration information of the third information, an MCS of the third information, an RV of the third information, an NDI of the third information, a quantity of HARQ processes of the third information, or a DAI of the third information.

In another possible design, the transmitting device may alternatively jointly indicate scheduling information shared by the second information and the third information, and separately indicate scheduling information exclusive to the second information and scheduling information exclusive to the third information in the first-stage control information, to reduce signaling overheads.

For example, the first-stage control information may include one or more of the following: port configuration information, an MCS, or an RV. The first-stage control information may further include one or more of the following: an NDI of the second information, a quantity of HARQ processes of the second information, or a DAI of the second information. The first-stage control information may further include one or more of the following: an NDI of the third information, a quantity of HARQ processes of the third information, or a DAI of the third information. The port configuration information, the MCS, or the RV is the scheduling information shared by the second information and the third information.

Based on the foregoing two possible designs, for the scheduling information of the third information, in a possible design, the transmitting device may separately indicate the scheduling information of the third data and the scheduling information of the first information in the first-stage control information.

For example, the first-stage control information may include one or more of the following: port configuration information of the third data, an MCS of the third data, an RV of the third data, an NDI of the third data, a quantity of HARQ processes of the third data, or a DAI of the third data. The first-stage control information may further include one or more of the following: port configuration information of the first information, an MCS of the first information, an RV of the first information, an NDI of the first information, a quantity of HARQ processes of the first information, or a DAI of the first information.

In another possible design, the transmitting device may alternatively jointly indicate scheduling information shared by the third data and the first information, and separately indicate scheduling information exclusive to the third data and scheduling information exclusive to the first information in the first-stage control information, to reduce signaling overheads.

For example, the first-stage control information may include one or more of the following: port configuration information, an MCS, or an RV. The first-stage control information may further include one or more of the following: an NDI of the third data, a quantity of HARQ processes of the third data, or a DAI of the third data. The first-stage control information may further include one or more of the following: an NDI of the first information, a quantity of HARQ processes of the first information, or a DAI of the first information. The port configuration information, the MCS, or the RV is the scheduling information shared by the third data and the first information.

Optionally, the first-stage control information may further include one or more of the following: third indication information, time-frequency resource information of the second information, time-frequency resource information of the third information, time-frequency resource information of the second-stage control information, mapping information from a VRB to a PRB, PUCCH signaling of the first data, or PSFCH signaling of the first data.

The third indication information may indicate that the second-stage control information including the second information and the third information exists.

For example, the third indication information may be 1 bit. A value of the 1 bit may be set to 1 to indicate that the second-stage control information including the second information and the third information exists, or a value of the 1 bit may be set to 0 to indicate that the second-stage control information including the second information and the third information does not exist. Alternatively, a value of the 1 bit may be set to 0 to indicate that the second-stage control information including the second information and the third information exists, or a value of the 1 bit may be set to 1 to indicate that the second-stage control information including the second information and the third information does not exist.

For another example, the third indication information may alternatively include a plurality of bits. A value of the plurality of bits may be set to a specific value to indicate that the second-stage control information including the second information and the third information exists. Alternatively, a value of the plurality of bits may be set to other values to indicate other meanings.

For example, the third indication information includes two bits. A value of the two bits may be set to 10 to indicate that the second-stage control information including the second information and the third information exists, or a value of the two bits may be set to 00 to indicate that the second-stage control information does not exist, or a value of the two bits may be set to 01 to indicate that the second-stage control information exists (the second-stage control information may not include the second information and the third information).

If the transmitting device sets the value of the third indication information to 10 to indicate that the second-stage control information including the second information and the third information exists, the receiving device may receive the second-stage control information, and decode the second-stage control information with reference to step 1603. If the transmitting device sets the value of the third indication information to 00 to indicate that the second-stage control information does not exist, the receiving device may directly receive the second data. If the transmitting device sets the value of the third indication information to 01 to indicate that the second-stage control information exists, the receiving device may receive the second-stage control information, and decode the second-stage control information in a predefined manner.

For the time-frequency resource information of the second information and the time-frequency resource information of the third information, the transmitting device may directly indicate a time-frequency resource of the second information and/or a time-frequency resource of the third information. Alternatively, the transmitting device may indirectly indicate a time-frequency resource of the second information and/or a time-frequency resource of the third information.

For example, the transmitting device may indicate the time-frequency resource of the second information by indicating a ratio of a length of the second information to a length of the second-stage control information, and/or indicate the time-frequency resource of the third information by indicating a ratio of a length of the third information to a length of the second-stage control information.

The transmitting device may determine the ratio based on the length of the second information and the length of the second-stage control information. The receiving device may determine the length of the second-stage control information based on the time-frequency resource information of the second-stage control information, and then determine a specific value of the length of the second information based on the length of the second-stage control information and the ratio. Compared with sending the specific value of the length of the second information, sending the ratio can reduce signaling overheads.

Similarly, the transmitting device may determine the ratio based on the length of the third information and the length of the second-stage control information. The receiving device may determine the length of the second-stage control information based on the time-frequency resource information of the second-stage control information, and then determine a specific value of the length of the third information based on the length of the second-stage control information and the ratio. Compared with sending the specific value of the length of the third information, sending the ratio can reduce signaling overheads.

Optionally, because the third information is determined based on the second joint encoding result of the third data and the first information, the transmitting device may further indicate time-frequency resource information of the third data and/or time-frequency resource information of the first information.

The transmitting device may directly indicate a time-frequency resource of the third data and/or a time-frequency resource of the first information. Alternatively, the transmitting device may indirectly indicate a time-frequency resource of the third data and/or a time-frequency resource of the first information.

For example, the transmitting device may indicate the time-frequency resource of the third data by indicating a ratio of a length of the third data to a length of the third information, and/or indicate the time-frequency resource of the first information by indicating a ratio of a length of the first information to a length of the third information.

For descriptions of the PUCCH signaling of the first data and the PSFCH signaling of the first data, refer to the related descriptions in step 1001. Details are not described again.

Based on the foregoing description of the first-stage control information, the receiving device may determine a quantity of bits of the first-stage control information based on predefined configuration information or configuration information delivered by the transmitting device, and perform blind detection on the first-stage control information based on the quantity of bits, thereby reducing blind detection complexity.

Optionally, for example, the first data is data of a first service, and the second data is data of a second service. A receiving device associated with the first service and a receiving device associated with the second service may receive, by using a same RNTI, the first-stage control information sent by the transmitting device. Alternatively, a receiving device associated with a plurality of services (for example, associated with both the first service and the second service) may receive, by using an RNTI of the receiving device, the first-stage control information sent by the transmitting device.

Step 1602: The transmitting device sends the second-stage control information, and correspondingly, the receiving device receives the second-stage control information from the transmitting device.

As shown in FIG. 17, the second-stage control information may include the second information and the third information. The second information is determined based on the independent encoding result of the first data, and the third information is determined based on the second joint encoding result of the third data and the first information. In other words, the transmitting device may independently encode the first data to obtain the second information, perform second joint encoding on the third data and the first information to obtain the third information, and determine the second-stage control information based on the second information and the third information.

The third data is a part or all of the first data, and the first information is the second control information of the second data.

The transmitting device independently encodes the first data, so that a decoding delay can be reduced. This is applicable to a communication scenario in which a channel environment is good. In addition, the transmitting device may further perform second joint encoding on the third data and the first information, to achieve a long code gain, improve decoding performance, and improve communication reliability.

Optionally, when performing second joint encoding on the third data and the first information to obtain the third information, the transmitting device may map the third data to the first X bits ranked in descending order of decoding orders in the third information, or may not map the third data to the first X bits ranked in descending order of decoding orders in the third information. This is not limited. The following uses an example in which the transmitting device maps the third data to the first X bits ranked in descending order of decoding orders in the third information for description.

In a possible design, the third data may be located in the first X bits ranked in descending order of decoding orders in the third information, where X is a positive integer.

The transmitting device maps the third data to the first X bits ranked in descending order of decoding orders in the third information, so that when decoding the third information, the receiving device can determine the first X bits ranked in descending order of decoding orders in the third information as the third data, thereby preferentially decoding the third data, reducing a decoding delay of the third data, and improving decoding performance.

For example, the transmitting device may map the third data to the X N bits ranked in descending order of decoding orders in the third information in a bit flipping manner.

In another possible design, similar to that the transmitting device maps the third data to the first X bits ranked in descending order of decoding orders in the third information in the bit flipping manner, when the transmitting device does not process the third data in the bit flipping manner, the receiving device may perform bit flipping on the third information in the bit flipping manner when receiving the third information, to obtain a bit flipping result, and determine the first X bits ranked in descending order of decoding orders in the bit flipping result as the third data, thereby preferentially decoding the third data, reducing a decoding delay of the third data, and improving decoding performance.

Optionally, the transmitting device may further send fifth indication information to the receiving device, to indicate whether the transmitting device performs bit flipping. Alternatively, whether the transmitting device performs bit flipping may be indicated in a manner predefined in a protocol.

Optionally, the transmitting device may add the fifth indication information to the first-stage control information and send the first-stage control information to the receiving device.

Optionally, the third information may further include CRC information, the CRC information is located in an (X+1)^{th} bit to an (X+M)^{th} bit ranked in descending order of decoding orders in the third information, where M is a positive integer, and the CRC information is used to check the third data.

The transmitting device may further add the CRC information to the third information, to assist the receiving device in determining whether the third data is correctly decoded. The transmitting device adds the CRC information to the (X+1)^{th} bit to the (X+M)^{th} bit ranked in descending order of decoding orders in the third information, so that the receiving device can decode the CRC information after decoding the third data, thereby quickly determining whether the third data is correctly decoded, reducing a decoding delay, and improving decoding performance.

Optionally, the transmitting device may further send seventh indication information to the receiving device, to indicate whether the third information includes the CRC information. Alternatively, whether the third information includes the CRC information may be indicated in a manner predefined in a protocol.

Optionally, the transmitting device may add the seventh indication information to the first-stage control information and send the first-stage control information to the receiving device.

Optionally, the first information in the third information may include one or more of the following: time-frequency resource information of the second data, scheduling information of the second data, PUCCH signaling of the second data, or PSFCH signaling of the second data. For descriptions of the first information, refer to the related descriptions of the first information in step 1002. Details are not described again.

Optionally, the third information may further include one or more of the following: fourth indication information, PUCCH signaling of the third data, or PSFCH signaling of the third data.

The fourth indication information may indicate a format of the third information. The format of the third information may indicate a field type included in the third information, a length of each field, and the like. The receiving device may interpret the received third information based on the format indicated by the fourth indication information.

For example, the third information corresponding to a format 1 may include the third data and the first information. The third information corresponding to a format 2 may include the third data, the first information, and the PUCCH signaling of the third data. The third information corresponding to a format 3 includes the third data, the first information, and the PSFCH signaling of the third data.

Optionally, when encoding the PUCCH signaling of the third data, the transmitting device may make a priority of a decoding order of the PUCCH signaling of the third data lower than a priority of a decoding order of the third data; and/or make the priority of the decoding order of the PUCCH signaling of the third data higher than a priority of a decoding order of the first information. Therefore, after decoding the third data, the receiving device decodes the PUCCH signaling of the third data, thereby reducing a decoding delay of the third data, and improving decoding performance.

Optionally, when encoding the PSFCH signaling of the third data, the transmitting device may make a priority of a decoding order of the PSFCH signaling of the third data lower than a priority of a decoding order of the third data; and/or make the priority of the decoding order of the PSFCH signaling of the third data higher than a priority of a decoding order of the first information. Therefore, after decoding the third data, the receiving device decodes the PSFCH signaling of the third data, thereby reducing a decoding delay of the third data, and improving decoding performance.

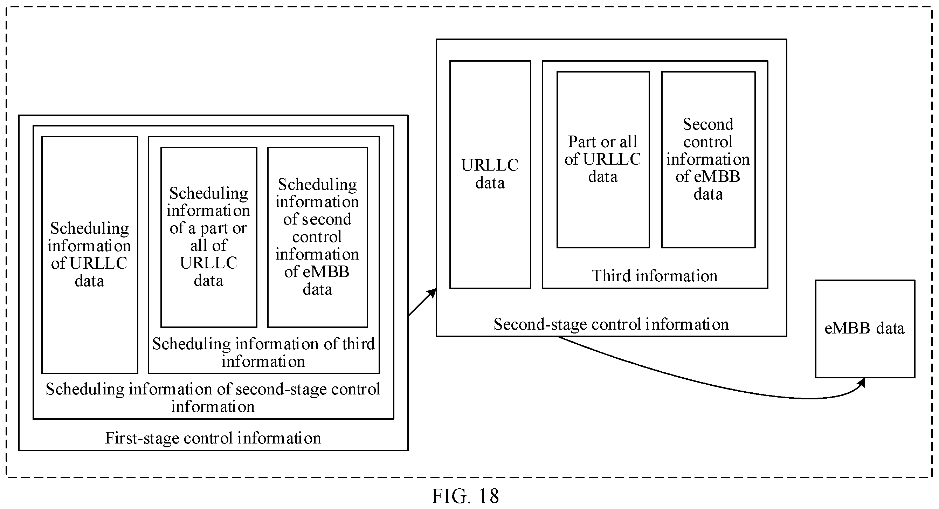

Based on the foregoing descriptions of the second information and the third information, for example, as shown in FIG. 18, the first data is the URLLC data, and the second data is the eMBB data. The second information may be an independent encoding result of the URLLC data, the first information may be second control information of the eMBB data, and the third information may be a second joint encoding result of a part or all of the URLLC data and the second control information of the eMBB data.

Step 1603: The receiving device independently decodes the second information based on the scheduling information of the second information.

If the receiving device successfully independently decodes the second information, the receiving device may obtain the first data.

Optionally, if the receiving device successfully independently decodes the second information, the receiving device may further perform second joint decoding on the second information and the third information. If the decoding succeeds, the receiving device may obtain the third data and the first information.

Optionally, if the receiving device fails to independently decode the second information, the receiving device may further perform third joint decoding on the third information. If the decoding succeeds, the receiving device may obtain the third data and the first information.

When performing third joint decoding on the third information, the receiving device may first decode the third data, and then decode the first information.

Optionally, for example, the first data is the data of the first service, and the second data is the data of the second service. The receiving device associated with the first service may discard the first information when obtaining the first data, the third data, and the first information through decoding. When obtaining the first data, the third data, and the first information through decoding, the receiving device associated with the second service may continue to receive the second data based on the first information.

Based on the method shown in FIG. 16, a short code (for example, the first data) may be encoded and transmitted based on a two-stage DCI scheduling structure for multi-service multiplexing. The transmitting device adds the scheduling information of the first data to the first-stage control information, so that a scheduling delay of the first data can be reduced, thereby reducing a decoding delay of the first data. In addition, the transmitting device independently encodes the first data, so that a decoding delay can be reduced. This is applicable to a communication scenario in which a channel environment is good. In addition, the transmitting device may further perform second joint encoding on the third data and the first information, to achieve a long code gain, improve decoding performance, and improve communication reliability.

Based on the method shown in FIG. 16, optionally, as shown in FIG. 17, the transmitting device may further send the second data to the receiving device, and the receiving device decodes the second data based on the first information.

Based on the method shown in FIG. 16, optionally, the transmitting device may further add retransmission indication configuration information to the first-stage control information. The retransmission indication configuration information may indicate one or more of the following: retransmitted content, a quantity of retransmissions, or a retransmission resource.

The retransmitted content may be one or more of the following: the second-stage control information, the second information, the third information, or the third data. The quantity of repetitions may be a quantity of repetitions of the retransmitted content. The retransmission resource may be a retransmission resource of the retransmitted content.

For example, 00 may indicate that there is no repetition, 01 may indicate that there is one repetition, 10 may indicate that there are two repetitions, and 11 may indicate that the quantity of repetitions is determined based on an RRC configuration.

The retransmission indication configuration information may directly indicate the retransmission resource of the retransmitted content, for example, may directly indicate a time-frequency resource of the retransmitted content. Alternatively, the retransmission indication configuration information may indirectly indicate the retransmission resource of the retransmitted content, for example, may indicate an association relationship between the retransmission resource of the retransmitted content and a time-frequency resource of the first data and/or a time-frequency resource of the second-stage control information. This is not limited.

Optionally, the retransmission resource may alternatively be indicated in a manner predefined in a protocol.

Based on the foregoing description of the retransmission indication configuration information, when retransmitting the retransmitted content, the transmitting device may perform retransmission through frequency domain alignment and time domain repetition, or may perform retransmission through time domain alignment and frequency domain repetition, or may perform retransmission in another specific retransmission manner. This is not limited.

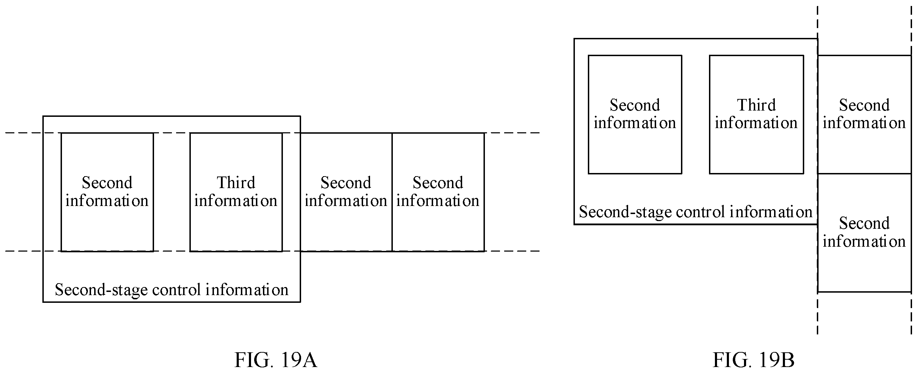

For example, the retransmitted content is the second information. As shown in FIG. 19A, the transmitting device may retransmit the second information through frequency domain alignment and time domain repetition. Alternatively, as shown in FIG. 19B, the transmitting device may retransmit the second information through time domain alignment and frequency domain repetition, to improve reliability of the first data by using a small quantity of retransmission resources.

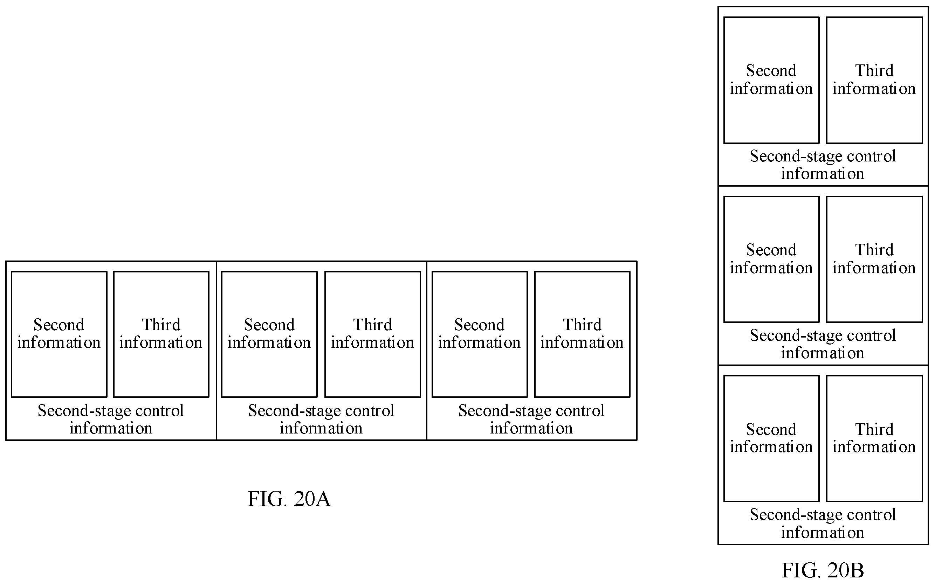

For another example, the retransmitted content is the second-stage control information. As shown in FIG. 20A, the transmitting device may retransmit the second-stage control information through frequency domain alignment and time domain repetition. Alternatively, as shown in FIG. 20B, the transmitting device may retransmit the second-stage control information through time domain alignment and frequency domain repetition, to improve reliability of the second-stage control information.

It should be noted that various embodiments of this application may be implemented separately, or may be implemented in combination. This is not limited. Unless otherwise stated or there is a logic conflict, terms and/or descriptions in different embodiments provided by this application are consistent and may be mutually referenced, and technical features in different embodiments may be combined based on an internal logical relationship thereof, to form a new embodiment.

It may be understood that, in embodiments of this application, an execution body may perform some or all of the steps in embodiments of this application. The steps or operations are merely examples. Embodiments of this application may further include performing other operations or variations of various operations. In addition, the steps may be performed in a sequence different from that presented in embodiments of this application, and not all the operations in embodiments of this application may be necessarily performed.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the devices may be divided into functional modules based on the foregoing method examples. For example, each functional module may be obtained through division based on each corresponding function, or two or more than two functions may be integrated into one processing module. The integrated module may be implemented in a form of hardware, or may be implemented in a form of a software functional module. It should be noted that, in embodiments of this application, division into modules is an example, and is merely a logical function division. In actual implementation, another division manner may be used.

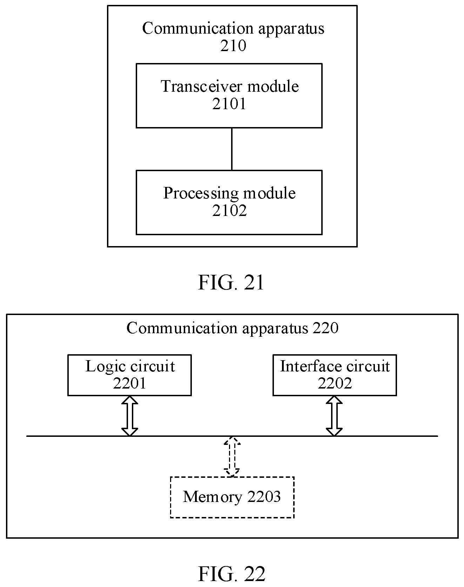

When each functional module is obtained through division based on each corresponding function, FIG. 21 shows a communication apparatus 210. The communication apparatus 210 may perform actions performed by the transmitting device or the receiving device in the methods shown in FIG. 10 to FIG. 20A and FIG. 20B. All related content of steps in the foregoing method embodiments may be referenced to function descriptions of corresponding functional modules. For technical effects that can be achieved by the communication apparatus 210, refer to the foregoing method embodiments. Details are not described herein again.

The communication apparatus 210 may include a transceiver module 2101 and a processing module 2102. For example, the communication apparatus 210 may be a communication device, or may be a chip used in the communication device, or another combined device or component that has a function of the communication apparatus. When the communication apparatus 210 is a communication device, the transceiver module 2101 may be a transceiver, where the transceiver may include an antenna, a radio frequency circuit, and the like; and the processing module 2102 may be a processor (or a processing circuit), for example, a baseband processor, where the baseband processor may include one or more CPUs. When the communication apparatus 210 is a component that has a function of the communication apparatus, the transceiver module 2101 may be a radio frequency unit, and the processing module 2102 may be a processor (or a processing circuit), for example, a baseband processor. When the communication apparatus 210 is a chip system, the transceiver module 2101 may be an input/output interface of a chip (for example, a baseband chip), and the processing module 2102 may be a processor (or a processing circuit) of the chip system and may include one or more central processing units. It should be understood that the transceiver module 2101 in embodiments of this application may be implemented by a transceiver or a transceiver-related circuit component, and the processing module 2102 may be implemented by a processor or a processor-related circuit component (or referred to as a processing circuit).

For example, the transceiver module 2101 may be configured to perform all receiving and sending operations performed by the communication apparatus in the embodiments shown in FIG. 10 to FIG. 20A and FIG. 20B, and/or configured to support another process of the technology described in this specification; and the processing module 2102 may be configured to perform all operations other than the receiving and sending operations performed by the communication apparatus in the embodiments shown in FIG. 10 to FIG. 20A and FIG. 20B, and/or configured to support another process of the technology described in this specification.

In another possible implementation, the transceiver module 2101 in FIG. 21 may be replaced with a transceiver, and a function of the transceiver module 2101 may be integrated into the transceiver. The processing module 2102 may be replaced with a processor, and a function of the processing module 2102 may be integrated into the processor. Further, the communication apparatus 210 shown in FIG. 21 may further include a memory.

Alternatively, when the processing module 2102 is replaced with a processor, and the transceiver module 2101 is replaced with a transceiver, the communication apparatus 210 in embodiments of this application may be a communication apparatus 220 shown in FIG. 22. The processor may be a logic circuit 2201, and the transceiver may be an interface circuit 2202. The communication apparatus 220 shown in FIG. 22 may further include a memory 2203.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

Embodiments of this application further provide a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit in the terminal in any one of the foregoing embodiments (including a data transmit end and/or a data receive end), for example, a hard disk or memory of the terminal. The foregoing computer-readable storage medium may also be an external storage device of the foregoing terminal, for example, a plug-in hard disk, a smart memory card (smart media card, SMC), a secure digital (secure digital, SD) card, and a flash card (flash card) that are configured on the foregoing terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. "First" and "second" are merely intended for description, and shall not be understood as an indication or implication of relative importance or an implicit indication of a quantity of indicated technical features. Therefore, a feature limited by "first" or "second" may explicitly or implicitly include one or more features. In the description of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item)" means one or more. ''A plurality of'' means two or more. "At least two (items)" means two, three, or more than three. "And/or" is used to describe an association relationship between associated objects, and indicates that three relationships may exist. For example, "A and/or B" may represent three cases: Only A exists, only B exists, and both A and B exist, where A and B may be singular or plural. The character "/" generally indicates an "or" relationship between the associated objects. "At least one of the following items (pieces)" or a similar expression thereof refers to any combination of these items, including a single item (piece) or any combination of a plurality of items (pieces). For example, at least one of a, b, or c may indicate a, b, c, a and b, a and c, b and c, or a, b, and c, where a, b, and c may be singular or plural. Both "when ..." and "if" mean that corresponding processing is performed in an objective case, are not intended to limit time, do not require a determining action during implementation, and do not mean that there is another limitation.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In this application, "sending information to ... (a terminal device)" may be understood as that a destination of the information is the terminal device, and may include directly or indirectly sending the information to the terminal device; and "Receiving information from ... (a terminal device)" may be understood as that a source of the information is the terminal device, and may include directly or indirectly receiving the information from the terminal device. Information may undergo necessary processing, for example, a format change, between a source end for sending the information and a destination end. However, the destination end may understand valid information from the source end.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such understanding, the technical solutions of this application essentially or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A communication method, comprising:
sending first-stage control information, wherein the first-stage control information comprises scheduling information of second-stage control information, and the scheduling information of the second-stage control information comprises scheduling information of first data; and
sending the second-stage control information, wherein the second-stage control information is determined based on a first joint encoding result of the first data and first information, and the first information is second control information of second data.

2. A communication method, comprising:
receiving first-stage control information, wherein the first-stage control information comprises scheduling information of second-stage control information, and the scheduling information of the second-stage control information comprises scheduling information of first data;
receiving the second-stage control information, wherein the second-stage control information is determined based on a first joint encoding result of the first data and first information, and the first information is second control information of second data; and
decoding the second-stage control information based on the scheduling information of the second-stage control information, to obtain a decoding result, wherein the decoding result comprises the first data.

3. The method according to claim 2, wherein
the decoding result further comprises the first information.

4. The method according to claim 2 or 3, wherein the decoding the second-stage control information based on the scheduling information of the second-stage control information, to obtain the decoding result comprises:
performing first joint decoding on the first data and the second-stage control information, to obtain the decoding result.

5. The method according to any one of claims 1 to 4, wherein
the scheduling information of the second-stage control information further comprises scheduling information of the first information.

6. The method according to any one of claims 1 to 5, wherein
the scheduling information comprises one or more of the following: port configuration information, a demodulation reference signal DMRS initialization sequence, a modulation and coding scheme MCS, a redundancy version RV, a new data indicator NDI, a quantity of hybrid automatic repeat request HARQ processes, or a downlink assignment index DAI.

7. The method according to any one of claims 1 to 6, wherein
the first-stage control information further comprises one or more of the following: first indication information, time-frequency resource information of the second-stage control information, length information of the first data, mapping information from a virtual resource block VRB to a physical resource block PRB, physical uplink control channel PUCCH signaling of the first data, or physical sidelink feedback channel PSFCH signaling of the first data, wherein
the first indication information indicates that the second-stage control information comprising the first data exists.

8. The method according to any one of claims 1 to 7, wherein
the first data is located in the first N bits ranked in descending order of decoding orders in the second-stage control information, wherein N is a positive integer.

9. The method according to claim 8, wherein
the second-stage control information further comprises cyclic redundancy check CRC information, the CRC information is located in an (N+1)^{th} bit to an (N+M)^{th} bit ranked in descending order of decoding orders in the second-stage control information, wherein M is a positive integer, and the CRC information is used to check the first data.

10. The method according to any one of claims 1 to 9, wherein
the first information comprises one or more of the following: time-frequency resource information of the second data, scheduling information of the second data, PUCCH signaling of the second data, or PSFCH signaling of the second data.

11. The method according to any one of claims 1 to 10, wherein
the second-stage control information further comprises one or more of the following: second indication information, the PUCCH signaling of the first data, or the PSFCH signaling of the first data, wherein the second indication information indicates a format of the second-stage control information.

12. The method according to claim 11, wherein
a priority of a decoding order of the PUCCH signaling of the first data is lower than a priority of a decoding order of the first data; and/or
the priority of the decoding order of the PUCCH signaling of the first data is higher than a priority of a decoding order of the first information.

13. The method according to claim 11, wherein
a priority of a decoding order of the PSFCH signaling of the first data is lower than a priority of a decoding order of the first data; and/or
the priority of the decoding order of the PSFCH signaling of the first data is higher than a priority of a decoding order of the first information.

14. The method according to any one of claims 1 to 13, wherein the method further comprises:
the first-stage control information further comprises retransmission indication configuration information, wherein the retransmission indication configuration information indicates one or more of the following: retransmitted content, a quantity of retransmissions, or a retransmission resource, and the retransmitted content is the first data and/or the second-stage control information.

15. A communication method, comprising:
sending first-stage control information, wherein the first-stage control information comprises scheduling information of second-stage control information, the scheduling information of the second-stage control information comprises scheduling information of second information, and the second information is determined based on an independent encoding result of first data; and
sending the second-stage control information, wherein the second-stage control information comprises the second information and third information, the third information is determined based on a second joint encoding result of third data and first information, the third data is a part or all of the first data, and the first information is second control information of second data.

16. A communication method, comprising:
receiving first-stage control information, wherein the first-stage control information comprises scheduling information of second-stage control information, the scheduling information of the second-stage control information comprises scheduling information of second information, and the second information is determined based on an independent encoding result of first data;
receiving the second-stage control information, wherein the second-stage control information comprises the second information and third information, the third information is determined based on a second joint encoding result of third data and first information, the third data is a part or all of the first data, and the first information is second control information of second data; and
independently decoding the second information based on the scheduling information of the second information.

17. The method according to claim 16, wherein the method further comprises:
performing second joint decoding on the second information and the third information based on the scheduling information of the second-stage control information.

18. The method according to claim 16 or 17, wherein the method further comprises:
performing third joint decoding on the third information based on the scheduling information of the second-stage control information.

19. The method according to any one of claims 15 to 18, wherein
the scheduling information of the second-stage control information further comprises scheduling information of the third information.

20. The method according to claim 19, wherein
the scheduling information of the third information comprises scheduling information of the third data and scheduling information of the first information.

21. The method according to any one of claims 15 to 20, wherein
the scheduling information comprises one or more of the following: port configuration information, a demodulation reference signal DMRS initialization sequence, a modulation and coding scheme MCS, a redundancy version RV, a new data indicator NDI, a quantity of hybrid automatic repeat request HARQ processes, or a downlink assignment index DAI.

22. The method according to any one of claims 15 to 21, wherein
the first-stage control information further comprises one or more of the following: third indication information, time-frequency resource information of the second information, time-frequency resource information of the third information, time-frequency resource information of the second-stage control information, mapping information from a virtual resource block VRB to a physical resource block PRB, physical uplink control channel PUCCH signaling of the first data, or physical sidelink feedback channel PSFCH signaling of the first data, wherein
the third indication information indicates that the second-stage control information comprising the second information and the third information exists.

23. The method according to any one of claims 15 to 22, wherein
the third data is located in the first X bits ranked in descending order of decoding orders in the third information, wherein X is a positive integer.

24. The method according to claim 23, wherein
the second-stage control information further comprises cyclic redundancy check CRC information, the CRC information is located in an (X+1)^{th} bit to an (X+M)^{th} bit ranked in descending order of decoding orders in the third information, wherein M is a positive integer, and the CRC information is used to check the third data.

25. The method according to any one of claims 15 to 24, wherein
the first information comprises one or more of the following: time-frequency resource information of the second data, scheduling information of the second data, PUCCH signaling of the second data, or PSFCH signaling of the second data.

26. The method according to any one of claims 15 to 25, wherein
the third information further comprises one or more of the following: fourth indication information, PUCCH signaling of the third data, or PSFCH signaling of the third data, wherein the fourth indication information indicates a format of the third information.

27. The method according to claim 26, wherein
a priority of a decoding order of the PUCCH signaling of the third data is lower than a priority of a decoding order of the third data; and/or
the priority of the decoding order of the PUCCH signaling of the third data is higher than a priority of a decoding order of the first information.

28. The method according to claim 26, wherein
a priority of a decoding order of the PSFCH signaling of the third data is lower than a priority of a decoding order of the third data; and/or
the priority of the decoding order of the PSFCH signaling of the third data is higher than a priority of a decoding order of the first information.

29. The method according to any one of claims 15 to 28, wherein the method further comprises:
the first-stage control information further comprises retransmission indication configuration information, wherein the retransmission indication configuration information indicates one or more of the following: retransmitted content, a quantity of retransmissions, or a retransmission resource, and the retransmitted content is one or more of the following: the second-stage control information, the second information, the third information, or the third data.

30. A communication apparatus, wherein the communication apparatus comprises a processor, and the processor is configured to run a computer program or instructions, so that the communication method according to any one of claims 1 and 5 to 14, the communication method according to any one of claims 2 to 14, the communication method according to any one of claims 15 and 19 to 29, or the communication method according to any one of claims 16 to 29 is performed.

31. The communication apparatus according to claim 30, wherein
the communication apparatus further comprises a memory, and the memory is configured to store the computer program or the instructions.

32. A communication apparatus, wherein the communication apparatus comprises an interface circuit and a logic circuit, the interface circuit is configured to input and/or output information, and the logic circuit is configured to: perform the communication method according to any one of claims 1 and 5 to 14, the communication method according to any one of claims 2 to 14, the communication method according to any one of claims 15 and 19 to 29, or the communication method according to any one of claims 16 to 29, and perform processing based on the information and/or generate the information.

33. A computer-readable storage medium, wherein the computer-readable storage medium stores computer instructions or a program, and when the computer instructions or the program runs on a computer, the communication method according to any one of claims 1 and 5 to 14, the communication method according to any one of claims 2 to 14, the communication method according to any one of claims 15 and 19 to 29, or the communication method according to any one of claims 16 to 29 is performed.

34. A computer program product, wherein the computer program product comprises computer instructions, and when some or all of the computer instructions run on a computer, the communication method according to any one of claims 1 and 5 to 14, the communication method according to any one of claims 2 to 14, the communication method according to any one of claims 15 and 19 to 29, or the communication method according to any one of claims 16 to 29 is performed.
